(19) Europäisches Patentamt / European Patent Office / Office européen des brevets

(11) **EP 2 890 200 B1**

(12) # FASCICULE DE BREVET EUROPEEN

(45) Date de publication et mention de la délivrance du brevet:
**28.09.2016 Bulletin 2016/39**

(51) Int Cl.:
***H04W 72/12*** *(2009.01)* ***H04W 72/04*** *(2009.01)*
***H04W 72/10*** *(2009.01)* ***H04W 74/08*** *(2009.01)*

(21) Numéro de dépôt: **14198675.2**

(22) Date de dépôt: **17.12.2014**

(54) **Procédé de transmission de messages de différents niveaux de priorité entre des noeuds émetteurs-récepteurs d'un réseau ad hoc**

Verfahren zur Übertragung von Nachrichten unterschiedlicher Prioritätsstufen zwischen Sender-Empfänger-Knoten eines Ad-Hoc-Netzes

Method for transmitting messages with various priority levels between transmitting and receiving nodes of an ad hoc network

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.12.2013 FR 1303122**

(43) Date de publication de la demande:
**01.07.2015 Bulletin 2015/27**

(73) Titulaire: **Thales**
**92200 Neuilly Sur Seine (FR)**

(72) Inventeur: **Fouillot, Pascale**
**92622 Gennevilliers Cedex (FR)**

(74) Mandataire: **Lavoix**
**2, place d'Estienne d'Orves**
**75441 Paris Cedex 09 (FR)**

(56) Documents cités:
**EP-A1- 2 440 001**
**EP-A1- 2 466 981**
**US-A1- 2002 075 941**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 890 200 B1

Printed by Jouve, 75001 PARIS (FR)

## Description

La présente invention concerne un procédé de transmission de messages dans un réseau ad hoc comprenant au moins deux noeuds émetteurs-récepteurs propres à recevoir et émettre des messages et communiquant entre eux par l'envoi de messages dans des créneaux temporels en accès aléatoire organisés en trames, les noeuds du réseau étant répartis en groupes selon une règle de répartition de base, les noeuds de chaque groupe ayant le droit d'émettre des messages dans un créneau temporel par trame d'un sous ensemble de trames prédéfini propre au groupe suivant la règle de répartition de base. Un exemple se trouve dans EP 2466981.

Un réseau ad hoc est un réseau sans fil capable de s'organiser sans infrastructure définie préalablement. Il n'y a pas d'élément central ou point d'accès permettant de gérer les communications entre les différentes entités du réseau. Tout noeud d'un tel réseau est à la fois noeud émetteur et noeud récepteur. Dans un tel réseau un noeuds est considéré comme voisin d'un autre lorsqu'ils sont suffisamment proches pour qu'une communication soit possible. Deux noeuds trop éloignés pour qu'une communication soit possible entre les deux mais suffisamment proches pour que chacun génère des interférences destructrices sur l'autre, sont des noeud interférents.

Un réseau ad hoc peut être constitué en utilisant la technologie WiFi décrite dans le document IEEE Std 802.11™- 2007, IEEE Standard for Information technology Télécommunications and information exchange between systems Local and metropolitan area networks - Part 11: Wireless LAN Medium Access Control (MAC) and Physical Layer (PHY) Specifications, 2007.

Un noeud de ce réseau désirant transmettre des informations à un noeud destinataire de ce même réseau diffuse d'abord à tous les noeuds voisins un message comprenant des données de signalisation indiquant l'identifiant du noeud destinataire. Il y a collision au niveau d'un noeud lorsqu'au moins deux messages sont reçus simultanément sur un même créneau temporel. S'il n'y a pas de collision avec un autre message, le noeud reçoit un message de confirmation du noeud destinataire et lui envoie alors les données utiles. Sinon il doit effectuer une retransmission des données de signalisation. La retransmission n'est faite qu'à l'issue d'un temps d'attente dont la durée est calculée grâce à un algorithme par exemple un algorithme de repli exponentiel. Cette durée s'exprime souvent en un multiple d'un certain quantum de temps, qui peut varier d'une unité à plusieurs dizaines voire plusieurs centaines. Ce mécanisme permet de limiter les collisions mais conduit à des temps d'attente longs entre deux essais de transmission des données de signalisation si les quanta de temps sont de durée par exemple de l'ordre de 5ms.

Une solution permettant de réduire ce temps d'attente tout en limitant les collisions est décrite dans la demande de brevet EP 2 440 001. Ce document décrit un procédé de transmission d'informations dans un réseau ad hoc comprenant au moins deux noeud émetteurs-récepteurs propres à recevoir et émettre des informations et communiquant entre eux par l'envoi d'informations dans des créneaux temporels en accès aléatoire organisés en trames. Ce procédé est caractérisé en ce les noeuds du réseau sont répartis en groupes selon une règle de répartition, chacun des noeud de chacun des groupes n'ayant le droit d'émettre des informations que dans un sous ensemble de trames prédéfini propre au groupe.

Toutefois ce procédé traite tous les messages de la même façon, donc la probabilité de réception d'un message est statistiquement équivalente pour tous les messages. Ainsi ce procédé ne prend pas en compte l'importance du message.

Il est souhaité que des messages de niveau de priorité élevé soient reçus avec une plus grande probabilité que des messages de niveau de priorité bas. Les messages de niveau de priorité élevé sont par exemple des messages d'alerte, pour signaler la présence d'un danger. Les messages de niveau de priorité bas sont par exemple des mesures transmises en continu par des capteurs.

Le but de l'invention est de proposer un mécanisme de réduction des collisions qui prenne en compte le niveau de priorité d'un message à transmettre et augmente la probabilité de réception d'un message de niveau de priorité élevé par rapport à un message de niveau de priorité bas.

A cet effet, l'invention a pour objet un procédé de transmission caractérisé en ce que :

- les messages comprennent au moins des messages de niveau de priorité bas et des messages de niveau de priorité élevé ;
- chacun des noeuds n'émet les messages de niveau de priorité bas que dans un créneau temporel par trame du sous ensemble de trames prédéfini propre à son groupe ; et
- chacun des noeuds émet les messages de niveau de priorité élevé dans un créneau temporel par trame du sous ensemble de trames prédéfini propre à son groupe et dans au moins un autre créneau temporel, le noeud émettant tout message de niveau de priorité élevé un plus grand nombre de fois que tout message de niveau de priorité bas.

Suivant d'autres modes de réalisation, le procédé du type précité comprend une ou plusieurs des caractéristiques suivantes, prises isolément ou suivant toutes les combinaisons techniquement possibles :

- chacun des noeuds émet les messages de niveau de priorité élevé dans au moins deux créneaux temporels d'une seule trame du sous ensemble de trames prédéfini propre à son groupe ;
- le noeud émettant un message de niveau de priorité élevé émet, en fonction de la probabilité P1 que le message soit reçu par au moins un de ses voisins, le message de niveau de priorité élevé dans un nombre de créneaux temporels m satisfaisant la relation :

$$P1 = \sum_{k=1}^{m} \left[ (-1)^{k+1} C_m^k \left(1 - \frac{k}{n}\right)^{N-T} \prod_{j=0}^{m-1} \left(1 - \frac{k}{n-j}\right)^{T-1} \right]$$

où :

- N est le nombre de noeuds voisins du noeuds émettant tous dans une même trame,
- T est le nombre de noeuds voisins du noeuds disposant d'un message de niveau de priorité élevé à émettre, et
- n est le nombre de créneaux temporels par trame.

- chacun des noeuds émet les messages de niveau de priorité élevé dans un unique créneau temporel d'au moins deux trames distinctes ;
- le noeud émettant un message de niveau de priorité élevé émet, en fonction de la probabilité P2 que le message soit reçu par au moins un de ses voisins, le message de niveau de priorité élevé dans un nombre de trames q satisfaisant la relation :

$$P2 = \sum_{k=1}^{q} \left[ (-1)^{k+1} C_q^k \left(1 - \frac{1}{n}\right)^{k(N-1)} \right]$$

où :

- N est le nombre de noeuds voisins du noeud émettant tous dans une même trame,
- T est le nombre de noeuds voisins du noeud disposant d'un message de niveau de priorité élevé à émettre, et
- n est le nombre de créneaux temporels par trame.
- chacun des noeuds émet les messages de niveau de priorité élevé dans au moins deux créneaux temporels d'au moins deux trames distinctes ;
- le noeuds émettant un message de niveau de priorité élevé émet, eh fonction de la probabilité P3 que le message soit reçu par au moins un de ses voisins, le message de niveau de priorité élevé dans un nombre de créneaux temporels m et un nombre de trames q satisfaisant la relation :

$$P3 = \sum_{k=1}^{q} \left[ (-1)^{k+1} C_q^k \, p(Y)^k \right]$$

avec

$$p(Y) = \sum_{k=1}^{m} \left[ (-1)^{k+1} C_m^k \left(1 - \frac{k}{n}\right)^{N-T} \prod_{j=0}^{m-1} \left(1 - \frac{k}{n-j}\right)^{T-1} \right]$$

où :

- N est le nombre de noeuds voisins du noeud émettant tous dans une même trame,
- T est le nombre de noeuds voisins du noeud disposant d'un message de niveau de priorité élevé à émettre, et
- n est le nombre de créneaux temporels par trame ;

- seule une trame est comprise dans le sous ensemble de trames prédéfini ;
- chaque noeud définit une contrainte pour les noeuds voisins,

- chaque noeud transmet la contrainte définie aux noeuds voisins, et
- chaque noeud définit le groupe auquel il appartient selon la règle de répartition en fonction des contraintes reçues des noeuds voisins ;
- la règle de répartition d'un noeud dans un groupe tient compte du nombre de noeuds émetteurs voisins ou interférents que les noeuds voisins du noeud considéré ont.

L'invention a également pour objet un réseau ad hoc comportant un ensemble de noeuds émetteurs-récepteurs propres à recevoir et émettre des messages et communiquant entre eux par l'envoi de messages dans des créneaux temporels en accès aléatoire organisés en trames, caractérisé en ce que chaque noeuds comporte des moyens pour la mise en oeuvre du procédé tel que défini ci-dessus.

Ces caractéristiques et avantages de l'invention apparaîtront à la lecture dé la description qui va suivre, donnée uniquement à titre d'exemple, et faite en référence aux dessins annexés, sur lesquels :

- la figure 1 est une vue schématique d'un réseau ad hoc à un instant temporel donné ;
- la figure 2 est un organigramme d'un algorithme de réduction des collisions utilisé par le procédé selon l'invention ;
- la figure 3 est un tableau montrant différentes situations lors de l'envoi de messages de niveau de priorité bas sur une même trame ;
- les figures 4, 5 et 6 sont des tableaux représentant des exemples de transmission de messages dans une trame ;
- les figures 7, 8, 9 et 10 sont des vues schématiques d'un exemple d'application de l'algorithme de réduction des collisions utilisé par le procédé selon l'invention ;
- les figures 11, 12, 13, 14, 15, 16, 17, 18, et 19 sont des schémas représentant des exemples de mise en oeuvre de l'algorithme utilisé par le procédé selon l'invention.
- la figure 20 est un organigramme du procédé selon l'invention ;
- la figure 21 est une vue schématique montrant l'envoi d'un message de niveau de priorité élevé sur une seule trame ; et
- la figure 22 est une vue schématique montrant l'envoi d'un message de niveau de priorité élevé sur plusieurs trames.

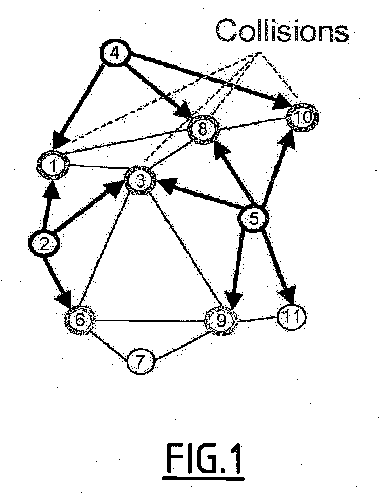

Le réseau illustré sur la figure 1 est par exemple un réseau ad hoc de communication entre des individus sur un terrain d'opérations. Dans cette figure les portées utiles des noeuds du réseau sont représentées par des traits pleins. Ce réseau ad hoc utilise des créneaux temporels d'accès aléatoires pour transmettre des messages. Ces créneaux temporels couramment désignés par slot en anglais sont répartis dans des trames avec un nombre de créneaux temporels dans chaque trame constant d'une trame à l'autre.

Chaque individu est équipé d'un émetteur-récepteur constituant un noeud du réseau. Chaque noeud comporte des moyens de communication pour recevoir des messages et en émettre sur des trames divisées en créneaux temporels. Un créneau temporel permet la transmission d'un message dont la taille est compatible avec la durée des créneaux temporels. Puis, à chaque trame, un message est transmis lors d'un créneau temporel. Le choix de ce créneau temporel se fait de manière aléatoire. Ce créneau temporel est utilisé pour une transmission en diffusion.

Chaque message présente un niveau de priorité choisi parmi au moins deux niveaux de priorité. Dans le mode de réalisation considéré, il existe des messages de niveau de priorité élevé, comme par exemple des messages à transmettre le plus rapidement possible et avec fiabilité et des messages de niveau de priorité bas, qui sont par exemple des messages à transmettre sans contrainte de temps.

Dans la suite, le procédé est d'abord décrit seulement pour des messages de niveau de priorité bas. Le traitement des messages de niveau de priorité élevé sera décrit après la présentation complète du traitement des messages de niveau de priorité bas.

Le réseau représenté sur la figure 1 comporte onze noeuds, numérotés de 1 à 11, et montre quatre situations de collisions au niveau des noeuds 1, 3, 8 et 10. Au niveau du noeud 1, il y a collision entre les messages émis par les noeuds 2 et 4, au niveau du noeud 3, il y a collision entre les messages émis par les noeuds 2 et 5, au niveau du noeud 8, il y a collision entre les messages émis par les noeuds 4 et 5, et au niveau du noeud 10, il y a collision entre les messages émis par les noeuds 4 et 5.

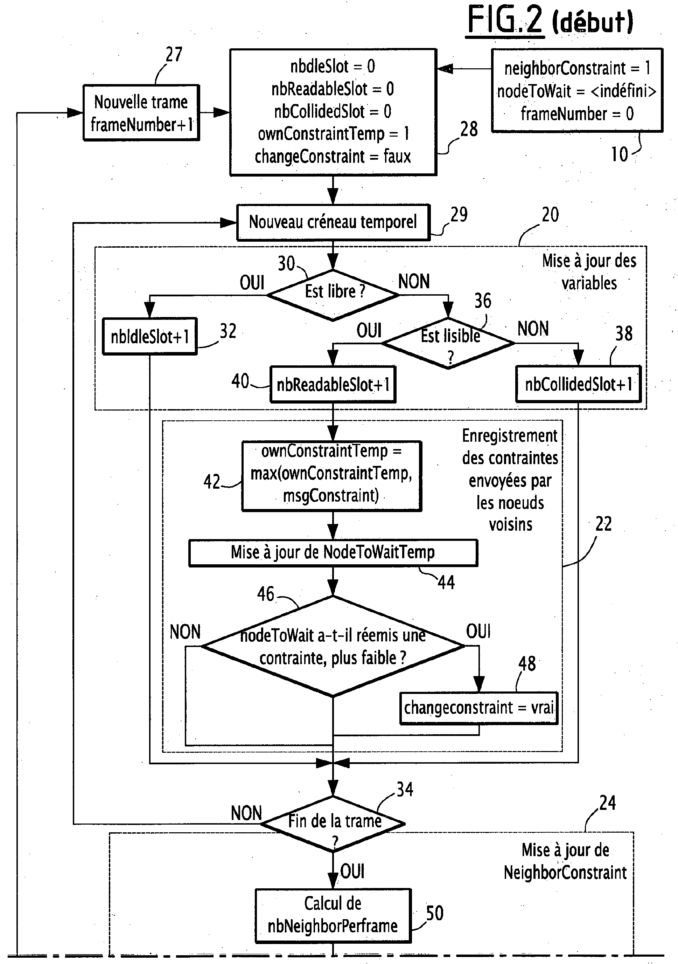

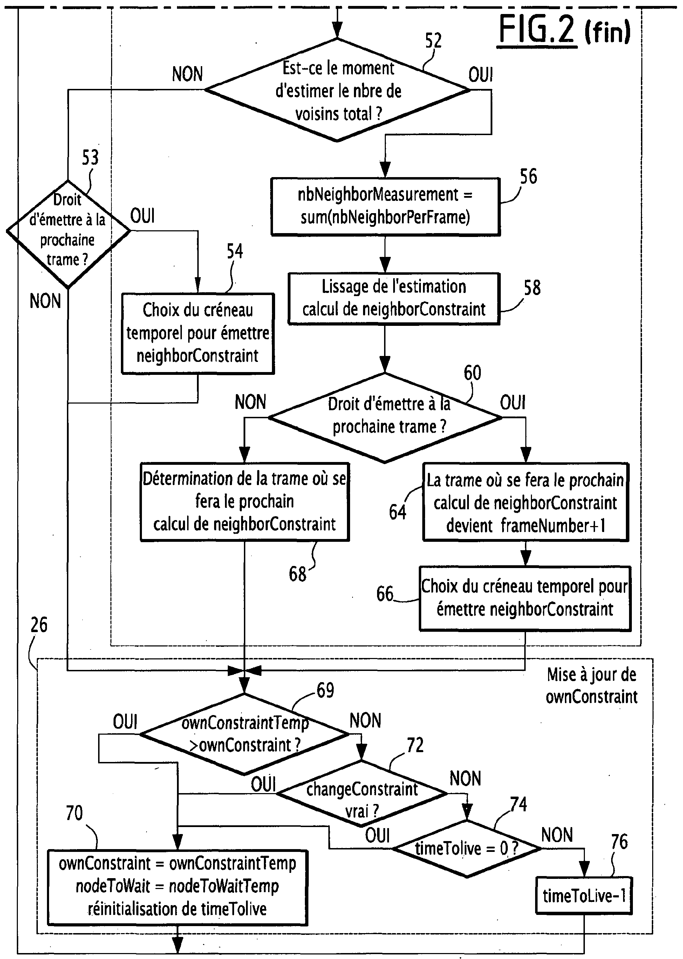

Chaque noeud est propre à mettre en oeuvre en continu l'algorithme de la figure 2. Cet algorithme est mis en oeuvre pour chaque nouvelle trame reçue par le noeud considéré.

Afin de permettre la mise en oeuvre de l'algorithme, en vue de réduire le nombre de collisions, les variables contenues dans deux champs suivants sont ajoutées à chaque message adressé dans un créneau temporel du message transmis par le noeud

- *msgConstraint* qui représente une contrainte imposée par le noeud émetteur à chacun de ses noeuds voisins ; et
- *ownConstraint* qui représente la contrainte que le noeud émetteur s'impose en fonction des contraintes qui lui ont été imposées par les noeuds voisins.

Un noeud soumis à une contrainte *ownConstraint* a le droit d'émettre un message de niveau de priorité bas toutes les *ownConstraint* trames par cycle, et il doit renoncer à émettre des messages de niveau de priorité bas dans les autres trames du cycle.

Un cycle est composé d'un nombre entier variable de trames successives. Un noeud dispose d'une opportunité d'émettre un message de niveau de priorité bas par cycle.

L'algorithme assure donc la définition de la contrainte propre à chaque noeud, ce qui revient à répartir les noeuds en des groupes, chacun associé à des trames, seuls les noeuds du groupe associé à une trame donnée ayant le droit d'émettre des messages de niveau de priorité bas dans cette trame. L'algorithme réduit ainsi les risques de collision.

Cette contrainte *ownConstraint* est déterminée par chaque noeud pour lui-même en fonction des contraintes *msgConstraint* imposées par les noeuds voisins.

Ainsi, chaque noeud :

- Estime le nombre de voisins ou interférents émettant dans son voisinage en fonction du nombre de créneaux reçus correctement, en collision et libres ;
- Calcule la probabilité de collision dans son voisinage ;
- Calcule une contrainte à imposer à ses voisins pour atteindre une probabilité de collision seuil ;
- Se soumet lui-même aux contraintes imposées par ses voisins ;

Une phase d'initialisation 10 précède l'exécution de l'algorithme. Durant cette phase certaines variables d'état sont initialisées :

- *neighborConstraint* est un entier représentant la contrainte imposée par le noeud considéré à chacun de ses noeuds voisins, initialisée à la valeur 1,
- *nodeToWait* est l'identifiant du noeud émetteur de la contrainte à laquelle se soumet le noeud considéré, initialisée à la valeur « indéfini»,
- *frameNumber* est le numéro de la trame courante, initialisé à zéro.

Plus précisément, l'algorithme comporte quatre phases majeures 20, 22, 24 et 26 illustrées sur la figure 2 correspondant respectivement à une estimation du nombre de voisins et interférents émettant dans une trame lors de la phase 20, un enregistrement des contraintes envoyées par les voisins au cours d'une trame, lors de la phase 22, une mise à jour, sous certaines conditions, de la contrainte à imposer à ses voisins, lors de la phase 24 et une mise à jour, sous certaines conditions, de la contrainte à laquelle le noeud se soumet au cours d'une trame lors de la phase 26.

Les deux premières phases 20, 22 s'effectuent à chaque nouveau créneau temporel tandis que les deux dernières phases 24, 26 s'effectuent à chaque fin de trame.

La phase 20 consiste en une mise à jour des variables contenant le nombre de créneaux libres, lisibles et en collision du noeud considéré dès qu'il reçoit les informations d'un nouveau créneau temporel. Ces variables lui permettront par la suite d'estimer le nombre de noeuds ayant émis dans son voisinage en fin de trame.

La phase 22 n'est réalisée que si le créneau temporel en cours est lisible. Elle consiste en un enregistrement des contraintes envoyées par le noeud émetteur voisin du noeud considéré.

La phase 24 consiste en un calcul du nombre total de noeuds émetteurs, voisins ou interférents du noeud considéré, à partir des variables mises à jour lors de la phase 20 et sous certaines conditions, une détermination de la règle de répartition à imposer aux noeuds voisins du noeud considéré, compte tenu du nombre de noeuds émetteurs, voisins ou interférents estimés.

Enfin, la phase 26 consiste en une mise à jour de la règle de répartition à laquelle le noeud considéré doit se soumettre.

Le même algorithme est mis en oeuvre en permanence par chaque noeud du réseau.

On considère, ici l'application de l'algorithme de la figure 2 pour un noeud d'un réseau ad hoc.

Cet algorithme est mis en oeuvre pour chaque nouvelle trame dont la réception commence à l'étape 27 au cours de laquelle la variable *frameNumber* est incrémentée de 1.

Les variables utilisées par l'algorithme sont d'abord initialisées pour chaque nouvelle trame lors d'une étape 28, sous la forme :

*nbReadableStot* = 0, *nbCollidedStot* = 0 et *nb*/*dleSlot* = 0 , *ownConstraintTemp* = 1 et *changeConstraint* = « faux » pour le noeud considéré, ces variables répondant au définitions suivantes :

- *nbReadableSlot* est le nombre de créneaux temporels lisibles dans une trame. Un créneau temporel est lisible si un message a été reçu, c'est-à-dire si exactement un noeud voisin du noeud considéré a tenté d'accéder au créneau temporel.

- *nbCollidedSlot* est le nombre de créneaux temporels au cours d'une trame dans lesquels ont eu lieu des collisions. Un créneau temporel est en collision si au moins deux noeuds voisins ou interférents du noeud considéré ont envoyé un message sur ce créneau.
- *nbIdleSlot* est le nombre de créneaux temporels libres dans une trame. Un créneau temporel est libre si aucun noeud voisin ou interférent n'a envoyé de message sur ce créneau.
- *ownConstraintTemp* est la contrainte la plus élevée reçue des noeuds voisins du noeud considéré au cours de la trame en cours de réception. Une règle de répartition impose aux noeuds qui s'y soumettent à n'émettre des messages de niveau de priorité bas qu'une fois toutes les q trames, q étant appelée la contrainte. *ownConstraint* est la contrainte q à laquelle le noeud considéré se soumet à un instant donné, laquelle peut être différente de *ownConstraintTemp,* et
- *changeConstraint* est un booléen prenant la valeur «vrai » si la contrainte *ownConstraint* doit être mise à jour.

Les phases 20 et 22 sont mises en oeuvre pour chaque nouveau créneau temporel de la trame reçu à l'étape 29.

La phase 20 débute à la réception du message contenu dans le nouveau créneau temporel par une première étape 30 consistant à déterminer si ce créneau temporel est libre ou pas.

Si le créneau est libre, la variable *nbIdleSlot* est incrémentée d'une unité au cours d'une étape 32 et on passe directement à la fin de la phase 22, où il est déterminé lors d'une étape 34 si la trame déterminée à l'étape 27 est terminée ou pas. Si elle n'est pas terminée, le noeud considéré doit traiter les informations contenues dans un nouveau créneau temporel détecté à l'étape 29. Sinon la phase 24 est mise en oeuvre.

Si le créneau n'est pas libre lors du test de l'étape 30, on détermine dans une étape 36 si le créneau est lisible ou pas.

Si le créneau n'est pas lisible la variable *nbCollidedSlot* est incrémentée d'une unité au cours d'une étape 38 et on passe directement à l'étape 34 à la fin de la phase 22.

Si le créneau est lisible la variable *nbReadableSlot* est incrémentée d'une unité au cours d'une étape 40 et on passe ensuite à la phase 22.

La phase 22 n'est donc réalisée que si le créneau temporel en cours est lisible.

Cette phase débute par une étape 42 au cours de laquelle le noeud compare la contrainte reçue, représentée par la variable *msgConstraint*, avec la variable *ownConstraintTemp* qui est la contrainte la plus élevée reçue des noeuds voisins du noeud considéré au cours de la trame en cours de réception. La contrainte la plus élevée entre la contrainte reçue *msgConstraint* et la variable *ownConstraintTemp,* jusque là la plus élevée, est enregistrée dans la variable *ownConstraintTemp.*

A l'étape 44 suivante, l'identifiant du noeud émetteur de cette contrainte la plus élevée est enregistré dans une variable *nodeToWaitTemp.*

L'étape 46 consiste à vérifier si le noeud *nodeToWait* ayant transmis au cours des trames précédentes la contrainte *msgConstraint* auquel le noeud considéré se soumet a réémis une contrainte plus faible. Si ce n'est pas le cas, on passe à l'étape 34, sinon la variable *changeConstraint* prend la valeur « vrai » au cours d'une étape 48 et on passe ensuite à l'étape 34.

La phase 24 débute par une étape 50 de calcul du nombre de noeuds voisins ou interférents ayant émis dans la trame qui vient d'être reçue, ce nombre est mémorisé dans un tableau *nbNeighborPerFrame* indexé par le numéro de la trame courante modulo *neighborConstraint.* Par la suite, pour alléger la notation l'index est omis. Pour effectuer le calcul, on utilise la relation :

$$nbNeighborPerFrame = nbReadableSlot + k \cdot nbCollidedSlot \text{ avec } k \geq 2 \qquad (1)$$

Le coefficient k est tout d'abord fixé à l'initialisation du réseau en fonction du nombre moyen de noeuds voisins ou interférents par noeud et du nombre de créneaux temporels dans une trame. Ensuite sa valeur peut être changée dynamiquement pour mieux refléter la topologie locale du réseau autour du noeud considéré.

Les exemples qui suivent illustrent le choix du coefficient k.

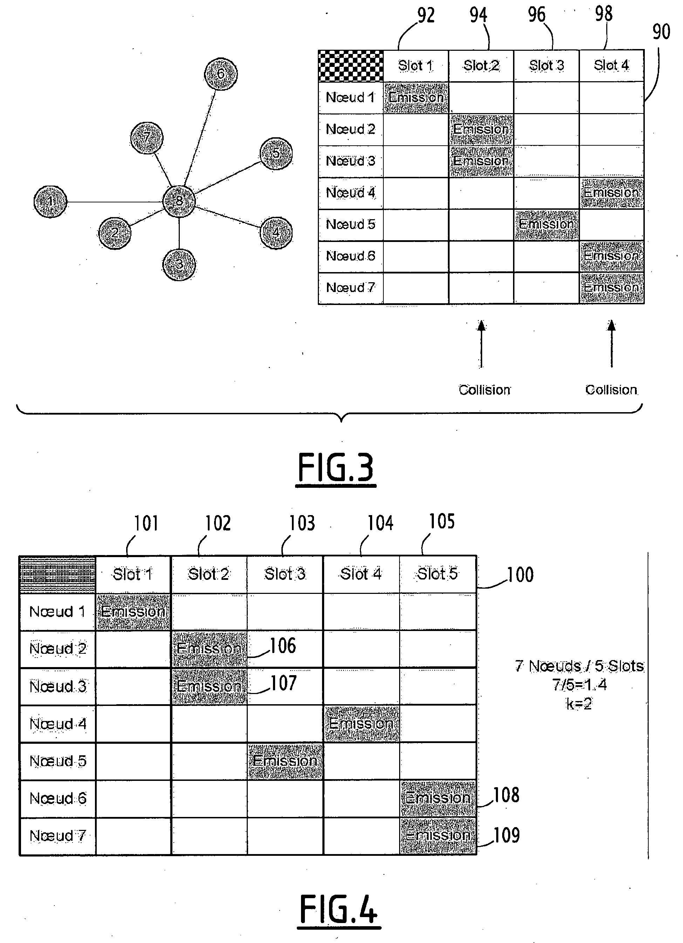

Sur la figure 3, un réseau ad hoc est composé de huit noeud numérotés de 1 à 8. Un noeud 8 est à l'écoute des messages envoyés par des noeuds dans son voisinage et cherche à estimer son nombre de noeuds émetteurs, voisins ou interférents. Un tableau 90 représente une trame divisée en quatre créneaux temporels 92, 94, 96 et 98, pendant lesquels les noeuds numérotés de 1 à 7 émettent des messages. En analysant les messages reçus sur cette trame, le noeud huit détecte une collision pendant les créneaux temporels 94 et 98 ; les deux créneaux temporels 92 et 96 sont quant à eux lisibles. Une estimation du nombre de noeuds voisins ou interférents ayant émis dans la trame consiste à appliquer la relation (1). Dans l'exemple de la figure 3, les variables *nbReadableSlot* et *nbCollidedSlot* valent deux. En choisissant k=2, le noeud 8 estime avoir six voisins.

Sur la figure 4, une trame 100 est divisée en cinq créneaux temporels 101, 102, 103, 104 et 105. Sept noeuds, numérotés de 1 à 7, émettent des messages dans cette trame. Le rapport entre le nombre de noeuds et le nombre de créneaux temporels vaut alors 1.4. On calcule un k idéal égal au nombre de messages en collisions divisé par le nombre de créneaux temporels sur lesquels se produisent les collisions. Sur la figure 4, il y a quatre messages 106, 107, 108 et 109 qui entrent en collision, ces collisions se produisant au cours des deux créneaux temporels 102 et 105. Le k idéal prend comme valeur 2.

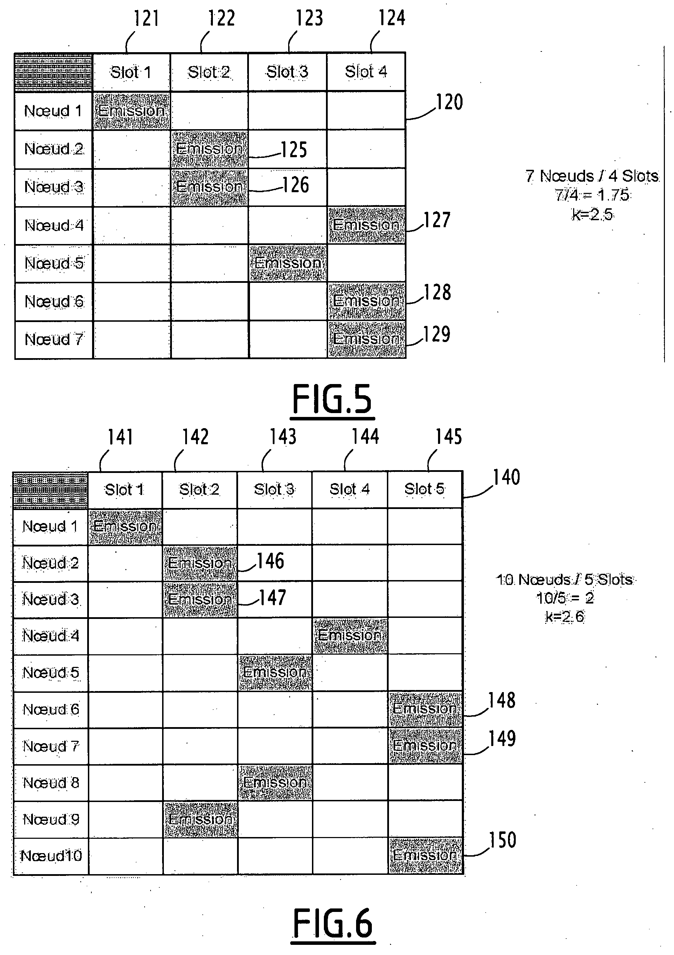

Sur la figure 5, une trame 120 est divisée en quatre créneaux temporels 121, 122, 123 et 124. Sept noeuds, numérotés de 1 à 7, émettent des messages dans cette trame. Le rapport entre le nombre de noeuds et le nombre de créneaux temporels vaut alors 1.75. Sur la figure 5, il y a cinq messages 125, 126, 127, 128 et 129 qui entrent en collision, ces collisions se produisant au cours des deux créneaux temporels 122 et 124. Le k idéal prend comme valeur 2.5.

Sur la figure 6, une trame 140 est divisée en cinq créneaux temporels 141, 142, 143, 144 et 145. Dix noeuds, numérotés de 1 à 10, émettent des messages dans cette trame. Le rapport entre le nombre de noeuds et le nombre de créneaux temporels vaut alors 2. Sur la figure 6, il y a cinq messages 146, 147, 148, 149 et 150 qui entrent en collision, ces collisions se produisant au cours des deux créneaux temporels 142 et 145. Le k idéal prend comme valeur 2.6.

Les figures 4, 5 et 6 mettent en évidence le fait que plus le rapport entre le nombre de noeuds et le nombre de créneaux temporels dans une trame est élevé, plus le facteur k idéal est grand.

Lors du début de la phase 24, le noeud considéré impose pour le moment aux noeuds voisins une règle de répartition dont la valeur de la contrainte est mémorisée dans une variable *neighborConstraint.*

L'estimation du nombre total de noeuds émetteurs, voisins ou interférents du noeud considéré qui permet ensuite de déterminer la nouvelle contrainte à imposer aux noeuds voisins se fait sur les dernières Q = *neighborConstraint* trames, en additionnant les voisinages estimés dans chacune des Q trames.

A cet effet, lors d'une étape 52, visible sur la figure 2, le noeud détermine s'il s'agit de la dernière estimation avant de pouvoir estimer le nombre total de noeuds émetteurs, voisins ou interférents et de calculer la nouvelle contrainte à imposer aux noeuds voisins.

S'il ne s'agit pas de la dernière estimation et si le noeud a le droit d'émettre à la prochaine trame, ce qui est vérifié lors d'une étape 53, le noeud considéré choisit de manière aléatoire, à l'étape 54, un créneau temporel pour émettre dans la prochaine trame les informations utiles ainsi que les contraintes *msgConstraint,* qui prend la valeur de *neighborConstraint* et *ownConstraint.* Lors de l'étape 53 le noeud détermine s'il a le droit d'émettre des messages de niveau de priorité bas en vérifiant s'il appartient au groupe qui a ce droit, les différents noeuds du réseau se distribuant en groupes selon une règle de répartition. Par exemple, un noeud soumis à une contrainte *ownConstraint* a le droit d'émettre une contrainte pour son voisinage dans la trame suivante si et seulement si son adresse MAC modulo *ownConstraint* est égale au numéro de la trame suivante modulo *ownConstraint*, c'est-à-dire

$$\mathrm{mod}(@\,MAC, ownConstraint) = \mathrm{mod}(frameNumber, ownConstraint).$$

S'il ne s'agit pas de la dernière estimation et que le noeud considéré n'a pas le droit d'émettre des messages de niveau de priorité bas, on passe directement à la fin de la phase 24.

S'il s'agit de la dernière estimation, dans une étape 56 on mémorise dans une variable *nbNeighborMeasurement* la somme des nombres de noeuds émetteurs, voisins ou interférents estimés dans chacune des Q trames c'est-à-dire la somme des *nbNeighborPerFrame.* Dans une étape suivante 58, on effectue un lissage de l'estimation du nombre total de noeuds voisins *nbNeighborEstim* en pondérant la valeur estimée à la trame actuelle par celle estimée à la précédente suivant la relation :

$$nbNeighborEstim = \alpha * nbNeighborEstim + (1-\alpha) * nbNeighborMeasurement \quad (2)$$

où *nbNeighborEstim* est une variable initialisée au début de l'exécution de l'algorithme à zéro ou à une autre valeur si le nombre de voisins total dans le réseau ad hoc est connu au départ, et $\alpha$ un coefficient de pondération par exemple égal à 0,8.

Le lissage de l'estimation du voisinage permet d'éviter des changements de contrainte à chaque erreur.

Lors de cette même étape 58, le noeud calcule la nouvelle contrainte *neighborConstraint* à imposer aux noeuds voisins.

La valeur de la contrainte *neighborConstraint* à imposer aux noeuds voisins en fonction du voisinage estimé s'établit comme suit.

Soit n le nombre de créneaux temporels dans une trame. Soit N le nombre de noeuds émetteurs dans le voisinage à un bond du noeud à l'écoute (voisins plus interférents).

Dans l'exemple proposé, l'hypothèse est que tous les noeuds du voisinage du noeud à l'écoute doivent transmettre un message à chaque trame. La probabilité que le noeud à l'écoute reçoive, sans qu'il y ait de collision, le message d'un de ses voisins au cours d'une trame s'écrit :

$$\overline{p_{collision}}(S) = \left(1 - \frac{1}{n}\right)^{N-1} \quad (3).$$

On fixe une probabilité $p_{Seuil}$ par exemple égale à 0,8 correspondant à la probabilité minimale que les voisins du noeud à l'écoute ont de se faire entendre par ce noeud à l'écoute.

Le nombre maximal de voisins et interférents émettant sur une même trame et pouvant entourer le noeud à l'écoute afin de ne pas dépasser $p_{Seuil}$ est donné par la relation :

$$M = 1 + \ln(p_{seuil}) \Big/ \ln\left(1 - \frac{1}{n}\right) \quad (4)$$

Dans le cas où le nombre de noeuds voisins et interférents, noté P, estimé par le noeud à l'écoute est supérieur à M, alors les noeuds voisins doivent se diviser en Q groupes émettant un message de niveau de priorité bas une fois toutes les Q trames, avec :

$$Q = \lfloor P / M \rfloor + 1 \quad (5)$$

avec $\lfloor x \rfloor$ qui représente la partie entière de x.

La valeur de P est égale à *nbNeighborMeasurement.*

Q est appelée la contrainte et la valeur de *neighborConstraint* est prise égale à Q.

Le q$^{ième}$ groupe (avec $1 < q < Q$) est formé des noeuds voisins dont les adresses MAC modulo Q sont égales à q-1 et émettent des messages de niveau de priorité bas à chaque trame dont le numéro modulo Q est égal à q-1. L'estimation du nombre de noeuds voisins et interférents doit ainsi se faire toutes les Q trames, en additionnant les voisinages estimés durant chacune des Q trames.

Dans le cas où le nombre de noeuds voisins et interférents estimé par le noeud à l'écoute est inférieur à M, alors les noeuds voisins peuvent continuer à émettre des messages de niveau de priorité bas à chaque trame. On fixe alors $Q = 1$.

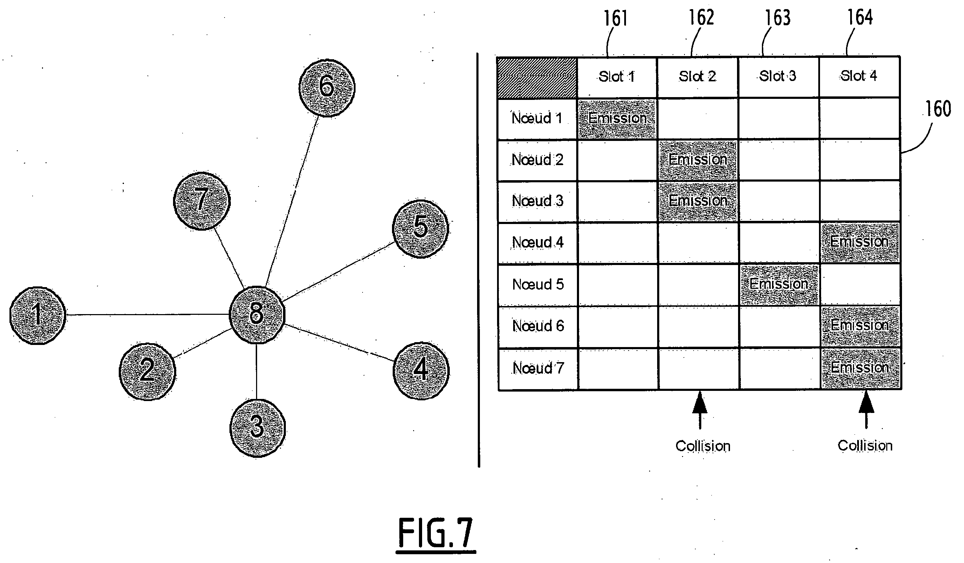

Sur la figure 7, un réseau ad hoc est composé de huit noeuds numérotés de 1 à 8. Un noeud 8 est à l'écoute des messages envoyés par des noeuds dans son voisinage ou par des interférents. Sur cette figure, une trame 160 est divisée en quatre créneaux temporels 161, 162, 163 et 164. On fixe k=2 et $p_{Seuil}$ =0,70. En appliquant la formule de l'équation (4), on obtient M=2,23. Le noeud 8 ne connaissant pas le nombre de noeuds voisins qui l'entourent, impose la contrainte Q=1 à ses noeuds voisins. Ces derniers, étant 7, ont donc une probabilité d'identification de 0,18, d'après l'équation (3). On suppose que les noeuds voisins du noeud 8 ont émis des messages tels que représentés sur le tableau 160. En appliquant la formule de l'équation (1), sachant qu'il y a deux créneaux temporels lisibles, deux créneaux temporels en collision et que k=2, le noeud 8 estime six voisins.

Le noeud 8 calcule la contrainte à envoyer à ses voisins d'après l'équation (5), qui vaut Q=3. En supposant que le numéro de la première trame au cours de laquelle les noeud doivent se soumettre à la contrainte imposée par le noeud 8 est 1, les noeuds 1, 4 et 7 pourront émettre pendant la trame 1, les noeuds 2 et 5 émettront pendant la seconde trame et les noeuds 3 et 6 émettront au cours de la troisième trame.

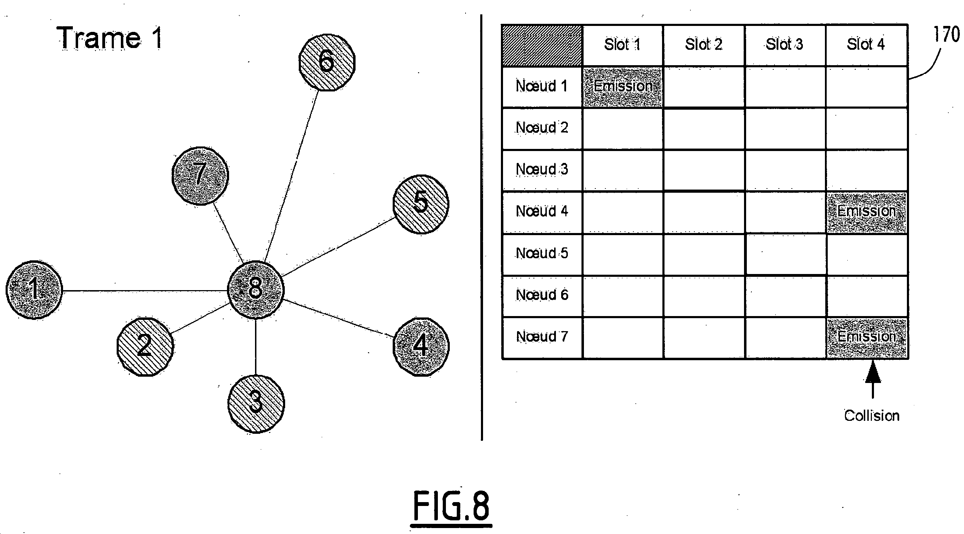

Sur la figure 8, seuls les noeuds 1, 4 et 7 émettent pendant la trame 1, représentée par le tableau 170. La probabilité qu'il n'y ait aucune collision est alors de 0,56, d'après l'équation (3).

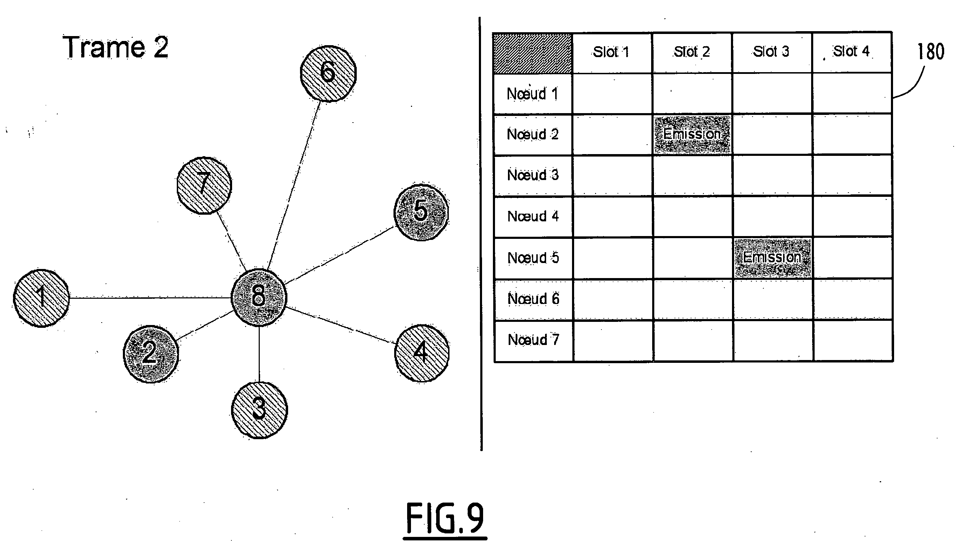

Sur la figure 9, seuls les noeuds 2 et 5 émettent pendant la trame 2, représentée par le tableau 180. La probabilité qu'il n'y ait aucune collision est alors de 0,75, d'après l'équation (3).

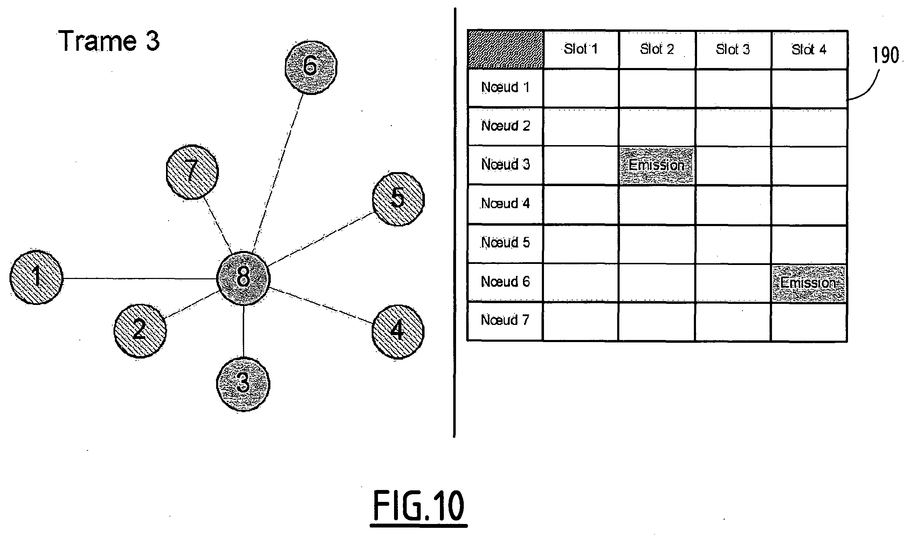

Sur la figure 10, seuls les noeuds 3 et 6 émettent pendant la trame 3, représentée par le tableau 190. La probabilité qu'il n'y ait aucune collision est alors de 0,75, d'après l'équation (3). La contrainte imposée par le noeud 8 étant égale à 3, la prochaine estimation du nombre de voisins se fait à la fin de la trame 3 où il estime :

$$nbNeighbourMeasurement = \underbrace{1 + k * 1}_{Trame1} + \underbrace{2 + k * 0}_{Trame2} + \underbrace{2 + k * 0}_{Trame3} = 7 \text{ voisins.}$$ La nouvelle contrainte neighborConstraint à envoyer aux noeuds voisins se calcule grâce à l'équation (5), elle vaut Q=4. L'algorithme se poursuit ensuite avec cette nouvelle contrainte.

Dans une étape 60, le noeud détermine s'il a le droit d'émettre la nouvelle contrainte dans la trame suivante suivant le même traitement que l'étape 53.

Si le noeud considéré a le droit d'émettre dans la trame suivante, on passe à une étape 64, qui consiste à calculer le numéro de la trame à la fin de laquelle le noeud considéré doit déterminer la prochaine contrainte *neighborConstraint* qu'il imposera à ses voisins : c'est la trame suivante *(frameNumber*+ 1*)*.

Dans une étape 66 le noeud considéré choisit de manière aléatoire un créneau temporel pour émettre dans la prochaine trame les informations utiles ainsi que les nouvelles contraintes *msgConstraint* (qui prend la valeur de *neighborConstraint*) et *ownConstraint.*

Si le noeud considéré n'a pas le droit d'émettre dans la trame suivante, dans une étape 68, le noeud considéré calcule le numéro de la trame à la fin de laquelle il doit déterminer la prochaine contrainte *neighborConstraint* qu'il imposera à ses voisins. Il y a deux cas : (1) si la contrainte vient d'être transmise alors le prochain calcul de *neighborConstraint* se fera Q trames plus tard : *frameNumber* + *Q ; (2)* sinon le prochain calcul de *neighborConstraintse* fera à la trame suivante : *frameNumber + 1*.

La phase 24 s'achève ainsi par l'étape 66 ou 68.

Dans la phase 26 la contrainte à laquelle le noeud considéré doit se soumettre est déterminée. Le mécanisme de mise à jour de *ownConstraintTemp* décrit en étape 42 assure l'application du principe de base selon lequel un noeud recevant plusieurs contraintes de ses voisins se soumet à la plus forte, ce qui revient à retenir la plus faible fréquence d'émission.

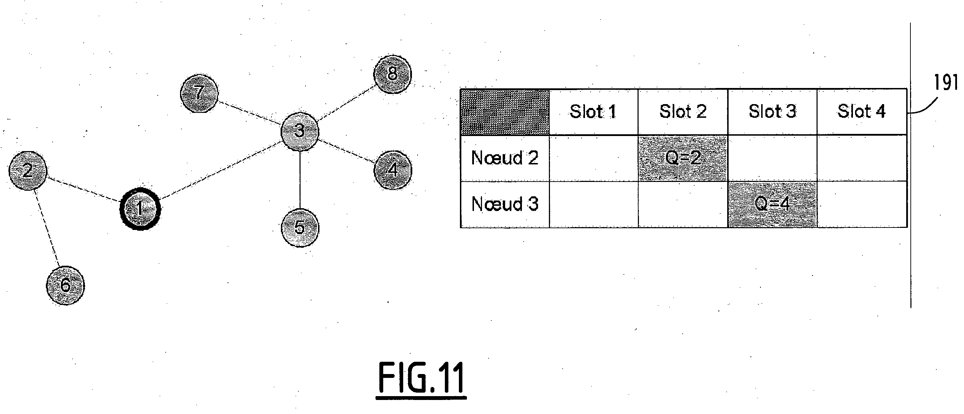

Sur la figure 11, un réseau ad hoc est composé de huit noeuds numérotés de 1 à 8. On suppose que les noeuds voisins 2 et 3 du noeud 1 ont émis des contraintes au cours d'une trame telle que représentée sur le tableau 191. Selon ce principe de base, le noeud 1 se soumettra à la contrainte émise par le noeud 3, c'est-à-dire Q=4.

Le voisin du noeud considéré envoyant la contrainte la plus forte peut lui-même être soumis à une contrainte par un de ses voisins. Il ne pourra donc pas envoyer sa contrainte à chaque trame. Les noeuds se soumettant à sa contrainte ne doivent pas pour autant se soumettre à des contraintes plus faibles lorsqu'ils ne reçoivent pas sa contrainte.

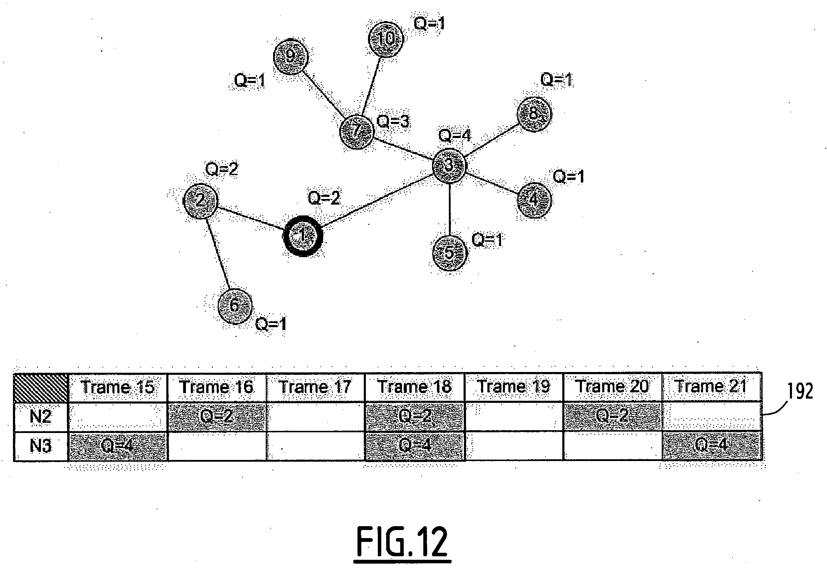

Sur la figure 12, un réseau ad hoc est composé de dix noeuds numérotés de 1 à 10, avec pour chaque noeud les contraintes imposées aux voisins. Un tableau 192 représente les contraintes reçues par le noeud 1 au cours de sept trames consécutives, numérotées de 15 à 21. Dans cet exemple, le noeud 3 envoie la contrainte Q=4 au cours de la trame 15. Etant lui-même soumis à la contrainte q=3, il ne pourra émettre qu'aux trames 18 et 21. D'après le principe de base, au cours des trames 16 à 21 le noeud 1 doit se soumettre à la contrainte q=4. Si ce principe de base n'est pas respecté, le nombre de voisins sera surestimé par le noeud 3, émetteur de la contrainte maximale, et l'algorithme divergera avec une estimation du nombre de voisins infinie.

La phase 26 débute donc par une étape 69 au cours de laquelle le noeud considéré détermine si *ownConstraintemp* est supérieure à la contrainte à laquelle il est soumis *ownConstraint.*

Si c'est le cas, on passe à une étape 70, au cours de laquelle le noeud détermine sa propre contrainte en affectant la valeur *ownConstraintTemp* à la variable *ownConstraint* et la valeur *nodeToWaitTemp* à la variable *nodeToWait.* Simultanément, on réinitialise le compteur *timeToLive* à une certaine valeur, par exemple le double de la contrainte à laquelle le noeud considéré est soumis. Ce compteur permet de définir si un noeud n'a pas émis depuis longtemps.

Si, à l'étape 69, la variable *ownConstraintemp* n'est pas supérieure à la contrainte à laquelle il est soumis *ownConstraint,* on compare la variable *changeConstraint* à « vrai » au cours d'une étape 72.

Si elle est égale à « vraie », c'est le cas où le noeud émetteur de la contrainte à laquelle se soumet actuellement le noeud considéré a émis une contrainte plus faible, on passe à l'étape 70. Sinon on passe à une étape 74 au cours de laquelle la valeur de *timeToLive est examinée.* Si *timeToLive* atteint la valeur 0, alors on considère que le noeud n'est probablement plus dans le voisinage du noeud considéré. Dans l'étape 74 on teste si le compteur *timeToLive* du noeud qui a émis la contrainte à laquelle le noeud considéré est soumis est nul ou pas. Si *timeToLive* vaut zéro alors on passe à l'étape 70, sinon on passe à une étape 76 au cours de laquelle on décrémente le compteur *TimeToLive* d'une unité.

Les étapes 69, 72 et 74 évitent la divergence de l'algorithme en imposant au noeud considéré de se soumettre à la contrainte maximale qu'il a reçue au cours d'une trame si et seulement si cette contrainte maximale est supérieure à la contrainte à laquelle il est soumis ou le noeud auquel il se soumet à réémis une contrainte plus faible ou le noeud auquel il se soumet n'est probablement plus dans son voisinage.

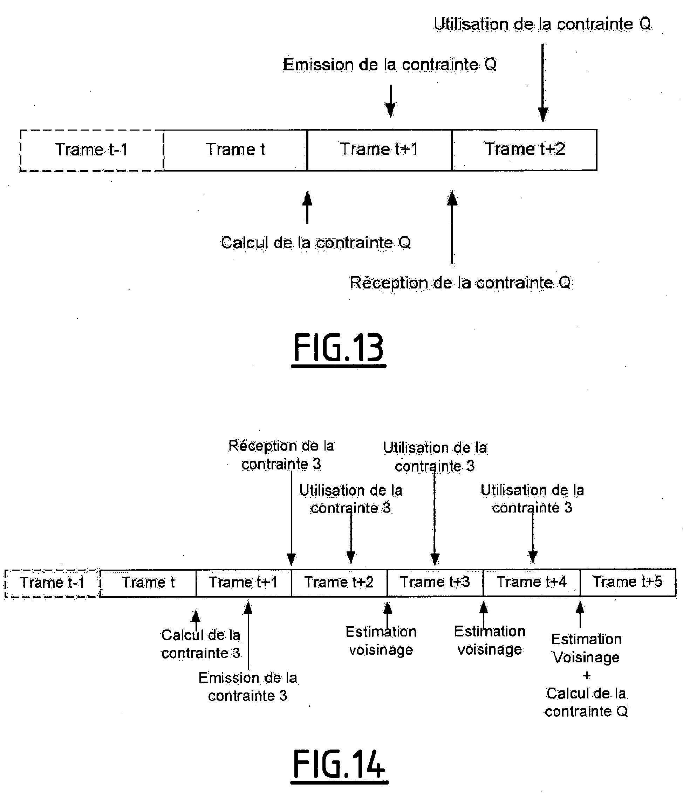

Sur les figures 13 à 15 sont explicités les décalages temporels entre la transmission et l'application des contraintes respectivement par un noeud émetteur et par des noeuds récepteurs.

Sur la figure 13, un noeud calcule à la fin d'une trame t la contrainte Q à imposer à son voisinage. En supposant que la contrainte q à laquelle le noeud considéré se soumet le permet, il transmet la contrainte Q aux noeuds voisins dans la trame suivante t+1. Les noeuds voisins recevant cette contrainte s'y soumettront à partir de la trame t+2.

Sur la figure 14, un noeud calcule à la fin d'une trame t la contrainte Q à imposer à son voisinage. Dans l'exemple de la figure 14, la contrainte vaut trois. En supposant que la contrainte q à laquelle le noeud considéré se soumet le permet, ce dernier émet la contrainte à la trame t+1, les noeuds voisins s'y soumettent à la trame t+2. Le noeud considéré débute ses estimations du voisinage à partir de la fin de la trame t+2. Le prochain calcul de la contrainte s'effectue à la fin de la trame t+2+Q-1, soit à la fin de la trame t+4 dans l'exemple de la figure 14, à partir des estimations du voisinage effectuées sur les trames t+2, t+3, ...., t+2+Q-1, soit sur les trames t+2, t+3 et t+4 dans l'exemple de la figure 14.

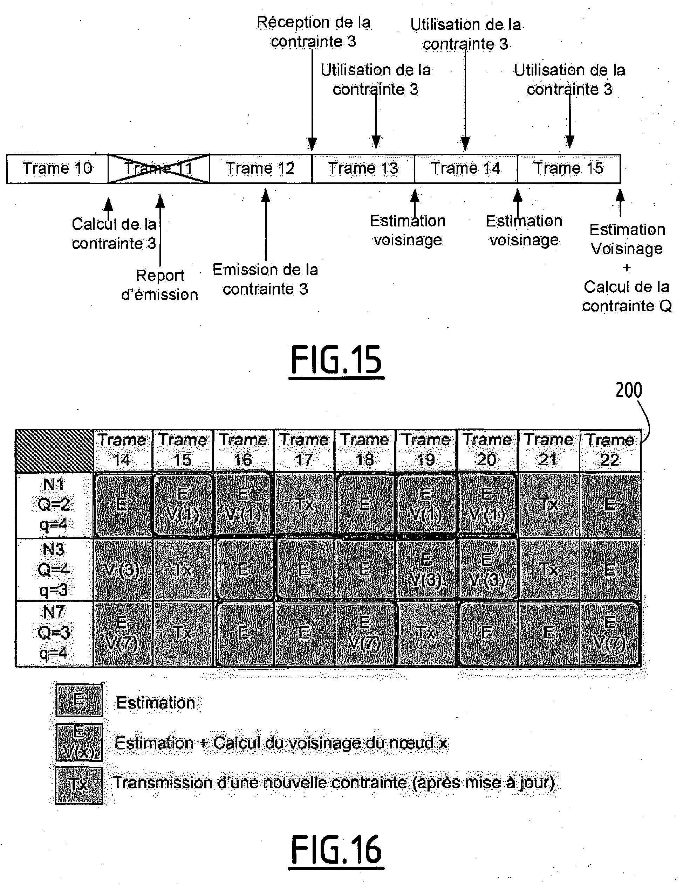

Sur la figure 15, un noeud 2 calcule à la fin d'une trame 10 la contrainte Q à imposer à son voisinage. Dans l'exemple de la figure 15, la contrainte vaut trois. Le noeud considéré est soumis à une contrainte, qui dans cet exemple l'empêche d'émettre la contrainte à la trame suivante 11. Il y a un report d'émission de la contrainte à imposer aux noeuds voisins. Soit v la trame à laquelle le noeud à l'écoute a le droit d'émettre la contrainte précédemment calculée. Alors le noeud à l'écoute doit reporter son prochain calcul de contrainte à la trame v+Q à partir des estimations réalisées à la fin des trames v+1, v+2, ..., v+Q. Dans l'exemple de la figure 15, v a comme valeur 12, le noeud à l'écoute réalise le calcul de la nouvelle contrainte à la fin de la trame 15, à partir des estimations réalisées à la fin des trames 13, 14 et 15. Dans cet exemple d'application de l'algorithme, aucune estimation du voisinage n'est réalisée à la fin de la trame de transmission de la contrainte, soit à la fin de la trame 12, et à la fin de la trame de report d'émission de la contrainte, soit à la fin de la trame 11.

Sur la figure 16, un tableau 200 représente une succession de trames numérotées de 14 à 22, et trois noeuds N1, N3 et N7. Le noeud N1 impose à ses voisins une contrainte Q=2 et est lui-même soumis à une contrainte q=4. Le noeud N3 impose à ses voisins une contrainte Q=4 et est lui-même soumis à une contrainte q=3. Le noeud N7 impose à ses voisins une contrainte Q=3 et est lui-même soumis à une contrainte q=4. Cet exemple illustre la manière dont l'algorithme du procédé tire partie des créneaux de report de transmission pour estimer son voisinage et calculer la contrainte. Suite à un report de transmission, la contrainte Q calculée par un noeud appelé S n'est pas envoyée à ses voisins. Les voisins de S continuent donc à utiliser la même contrainte que précédemment. Les noeuds transmettant un message au cours d'une trame de report de transmission T sont, sauf erreur par exemple due à une collision, les mêmes que ceux transmettant à la trame T-Q. L'algorithme du procédé utilise l'estimation du nombre de noeuds voisins et interférents transmettant au cours de la trame T pour recalculer le voisinage du noeud S. Les différents calculs de voisinage sont pondérés suivant la relation (2). Dans l'exemple de la figure 16, le noeud N1 calcule à la fin de la trame 15 son voisinage total V(1) Le noeud N1 doit attendre la trame 17 pour pouvoir transmettre la nouvelle contrainte. En fin de trame 16, dite trame de report de transmission, un second calcul du voisinage V'(1) a lieu, sur la base des estimations effectuées en trame 15 et 16 et de V(1). V'(1) est utilisé pour le calcul de la nouvelle contrainte à transmettre en trame 17.

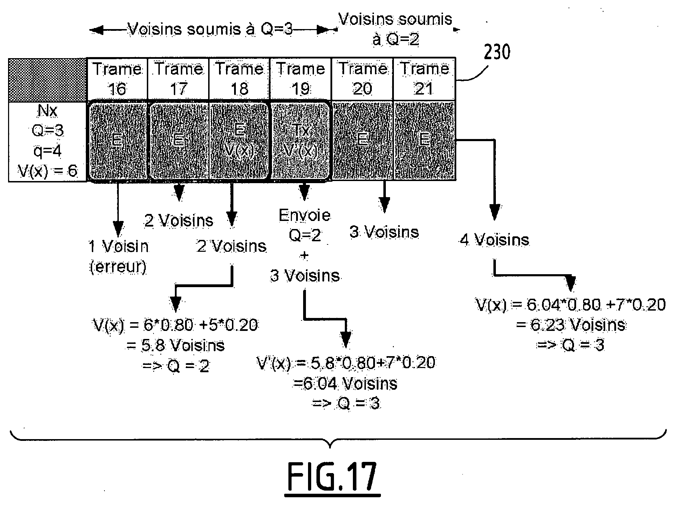

La figure 17 illustre un des bénéfices du lissage de l'estimation du nombre de voisins et interférents au cours des créneaux de transmission. Dans cette figure, un tableau 230 représente une succession de six trames numérotées de 16 à 21, et un noeud Nx tel que mod(x,4)=mod(15,4). Le noeud Nx impose une contrainte Q=3 à ses voisins et est lui-même soumis à une contrainte q=4. On suppose qu'au cours de la trame 16 il commet une erreur en estimant avoir un voisin au lieu de trois, qu'au cours de la trame 17 il estime avoir deux voisins, et qu'au cours de la trame 18 il estime avoir deux voisins. On suppose qu'il ne commet pas d'erreur dans les estimations du nombre de voisins ayant émis dans les trames 17 et 18. A la fin de la trame 18 il estime son nombre de voisins total à cinq au lieu de sept, ce qui le conduit à imposer une contrainte Q=2 au lieu de Q=3 à ses voisins en trame 19, dite trame de transmission. Dans l'exemple de la figure 17, le lissage de l'estimation est implémenté dans l'algorithme du procédé selon l'invention. La contrainte calculée en trame 19 ne sera pas prise en compte car la contrainte calculée à la trame 18 a déjà été envoyée. En revanche, le nombre de voisins calculés en trame 19 est pris en compte dans le calcul du voisinage des trames suivantes grâce au lissage de l'estimation. Ainsi il n'y a pas de perte d'informations liée à la transmission d'une contrainte dans une trame. Dans cet exemple, un lissage de l'estimation et une utilisation de l'ensemble des trames pour l'estimation sont mis en oeuvre par l'algorithme, l'estimation du nombre de voisins par un noeud est ainsi améliorée.

A cause des collisions, un noeud ne reçoit pas forcément la contrainte maximale à laquelle il doit se soumettre ce qui peut entraîner une forte variation du nombre de voisins estimé.

De préférence, un noeud envoie la contrainte qu'il impose à ses voisins ainsi que la contrainte à laquelle il se soumet lui-même, de telle sorte que ses voisins peuvent savoir si leur contrainte a été reçue.

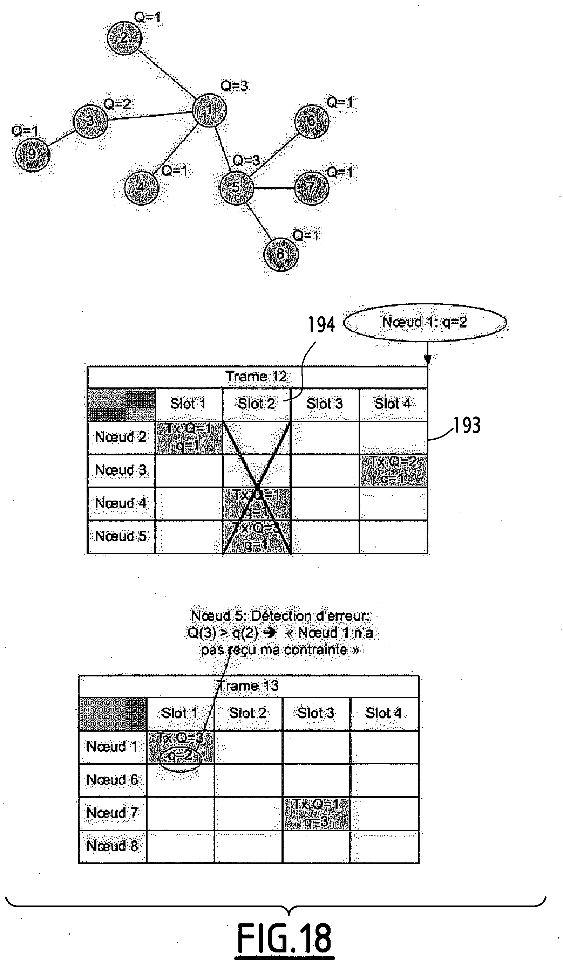

Sur la figure 18, un réseau ad hoc est composé de neuf noeuds numérotés de 1 à 9. On suppose que les noeuds émettent des messages dans des trames comportant quatre créneaux temporels indiqués « slot » sur la figure. Au cours d'une trame 11, on suppose que tous les noeuds se soumettent à une contrainte q = 1. A la fin de la trame 11, chaque noeud du réseau calcule la contrainte Q, qu'il va imposer à ses voisins. Ces contraintes sont émises en trame 12 et représentées sur la figure 18. Elles seront utilisées à partir de la trame 13. Un tableau 193 représente les messages reçus par le noeud 1 au cours de la trame 12. Dans les messages envoyés par un noeud, q désigne la contrainte à laquelle il se soumet et Q la contrainte qu'il impose à ses voisins. Au cours du créneau temporel 194, il y a collision entre les messages envoyés par les noeuds 4 et 5. Le noeud 1 se soumet donc à la contrainte maximale qu'il reçoit, c'est-à-dire Q=2, émise par le noeud 3. Au cours de la trame 13, on s'intéresse aux messages reçus par le noeud 5, noeud ayant émis la plus forte contrainte au cours de la trame précédente. Le noeud 1 transmet à la fois la contrainte qu'il impose à ses voisins et la contrainte à laquelle il se soumet. Ainsi, le noeud 5 sait que le noeud 1 se soumet à une contrainte plus faible que celle qu'il a imposée. Le noeud 5 est donc capable de détecter l'erreur. Cette solution présente l'avantage qu'un noeud peut savoir dans certains cas que son estimation de voisins sera mauvaise et ne mettra alors pas à jour cette estimation.

Dans une deuxième solution, un noeud connaît l'identité de l'émetteur du message qu'il reçoit.

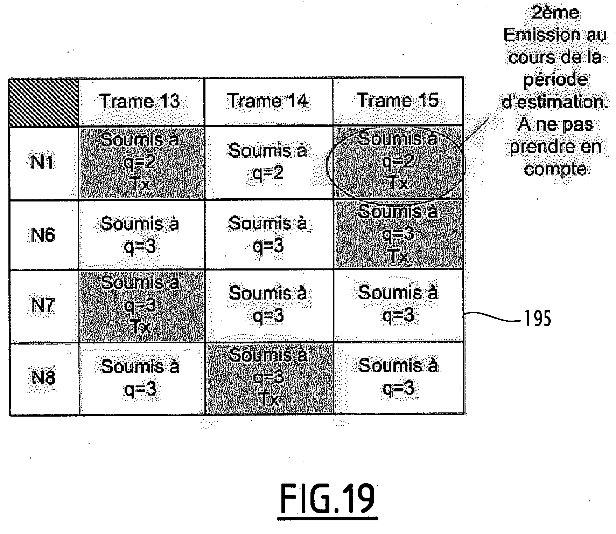

Sur la figure 19 le même réseau ad hoc que celui de la figure 18 est considéré. La même collision au cours de la trame 12 a lieu. Le noeud 1 se soumet donc à une contrainte q=2. Le noeud 5 ayant envoyé la contrainte Q=3 en trame 12, estime son voisinage sur les trames 13 à 15. Le tableau 195 représente les messages reçus par le noeud 5 au cours de ces trois trames 13, 14 et 15. En trame 15, le noeud 1 émet un second message dans la période d'estimation du voisinage du noeud 5. Par comparaison des identifiants des noeuds émetteurs, le noeud 5 détecte ce double envoi et n'en tient pas compte.

Cette solution présente l'avantage qu'un noeud est capable dans certains cas de détecter si un noeud voisin transmet plus d'un message au cours d'une période d'estimation, et de ne compter alors qu'une seule fois ce noeud voisin. Contrairement à la première solution qui ne permet que la détection d'une erreur, cette solution permet, si l'erreur est détectée, de la corriger. En revanche la première solution présente l'avantage de détecter l'erreur à partir du moment où un des messages du noeud s'étant trompé est reçu correctement alors que la deuxième solution ne peut détecter l'erreur que si les deux messages du noeud s'étant trompés sont reçus correctement. Il est possible d'implémenter dans l'algorithme du procédé selon l'invention l'une ou l'autre de ces solutions ou bien de combiner les deux afin de bénéficier à la fois d'un maximum d'erreurs détectées et de la possibilité d'en corriger certaines.

Le procédé selon l'invention permet ainsi de réduire le nombre de collisions sans ajuster la taille des trames, il est en effet utilisable avec une trame de taille fixe. Le procédé ne nécessite pas non plus l'envoi de messages supplémentaires de signalisation par exemple des messages balises. Seuls deux champs supplémentaires sont ajoutés aux messages transmis par les noeuds.

En outre, chacun des noeuds est apte à transmettre des messages de niveau de priorité élevé à ses voisins dans un créneau temporel défini suivant les mêmes règles que celles exposées ci-dessus pour les messages de niveau de priorité bas.

Selon l'invention et par dérogation à l'algorithme de la figure 2, pour augmenter la probabilité de réception d'un message de niveau de priorité élevé, le procédé augmente le nombre d'émissions du message de niveau de priorité élevé par rapport au nombre d'émission de tout message de niveau de priorité bas, dans un même cycle.

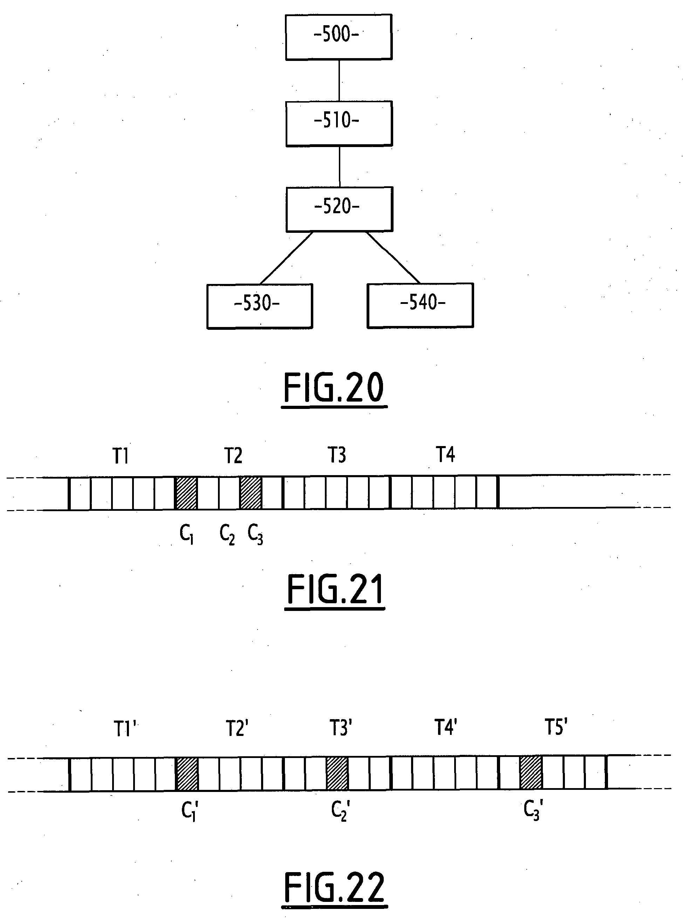

Lorsqu'un noeud a un message à émettre à des noeuds voisins, il applique le procédé dont l'algorithme est visible sur la figure 20.

Lors d'une première étape 500, que le message soit de niveau de priorité élevé ou de niveau de priorité bas, le noeud calcule la contrainte *neighborConstraint* qu'il doit émettre aux noeuds voisins, selon l'algorithme de la figure 2.

Lors d'une deuxième étape 510, le noeud calcule la contrainte *ownConstraint* qu'il doit respecter selon l'algorithme de la figure 2, en fonction des contraintes *neighborConstraint* reçues à la trame précédente de la part des noeuds voisins.

Les noeuds dont les adresses MAC modulo *ownConstraint* sont égales forment un groupe. Les noeuds de ce groupe sont soumis à une contrainte *ownConstraint. Ils* n'ont le droit d'émettre un message de niveau de priorité bas que toutes les *ownConstraint* trames. Cet ensemble de trames constitue un sous ensemble de trames prédéfini propre au groupe.

A la deuxième étape 510, le noeud est réparti dans un groupe selon une règle de répartition. La règle de répartition est le calcul de la contrainte *ownConstraint.*

Lors d'une troisième étape 520, le noeud détermine le niveau de priorité du message qu'il cherche à transmettre aux noeuds voisins.

Si le message que le noeud cherche à transmettre aux noeuds voisins est un message de niveau de priorité bas, le noeud passe à une quatrième étape 530 dans laquelle le noeud respecte la contrainte *ownConstraint.*

A cette étape 530, le noeud émet le message de niveau de priorité bas dans le sous ensemble de trames prédéfini propre à son groupe.

Le noeud n'émet le message de niveau de priorité bas qu'une seule fois par trame appartenant au sous ensemble de trames propre au groupe du noeud.

Le noeud émet dans ce cas le message de niveau de priorité bas ainsi que la contrainte *neighborConstraint* qu'il a calculé, dans un créneau appartenant à une trame du sous ensemble de trames prédéfini propre au groupe.

Si le message que le noeud cherche à transmettre aux noeuds voisins est un message de niveau de priorité élevé, le noeud passe à une cinquième étape 540. Le noeud envoie le message de niveau de priorité élevé dans un ensemble de créneaux et un ensemble de trames qui dépendent de la probabilité de réception du message par au moins un voisin du noeud.

L'étape 540 du procédé selon l'invention est différente selon trois modes de réalisation du procédé selon l'invention.

Dans un premier mode de réalisation, le message de niveau de priorité élevé est transmis plusieurs fois dans une même trame d'un même cycle.

Dans un deuxième mode de réalisation, le message de niveau de priorité élevé est transmis une seule fois par trame mais dans un ensemble de trames plus grand que l'ensemble de trame prédéfini propre au groupe. Le noeud envoie le message de niveau de priorité élevé dans un créneau par trame, en utilisant q trames d'un même cycle. Cela équivaut à autoriser le noeud émetteur du message de niveau de priorité élevé à appartenir à différents groupes.

Un troisième mode de réalisation combine les deux modes de réalisation précédents. Dans ce cas, le noeud envoie le message de niveau de priorité élevé dans au moins deux créneaux par trame, dans au moins deux trames d'un même cycle. Dans ce troisième mode de réalisation, le noeud transmet le message de niveau de priorité élevé plusieurs fois dans plusieurs trames par cycle.

Dans le premier mode de réalisation, à la cinquième étape 540, le noeud émet le message de niveau de priorité élevé dans une seule trame T2 appartenant au sous ensemble de trames prédéfini propre à son groupe, selon le procédé de la figure 2.

Le noeud émet le message de niveau de priorité élevé dans au moins deux créneaux c1, c2, c3 d'une seule trame T2 du sous ensemble de trames prédéfini propre à son groupe parmi des trames successives T1, T2, T3, T4, comme visible sur la figure 21.

Par exemple, le noeud émet le même message de niveau de priorité élevé dans trois créneaux c1, c2, c3 de la seule trame T2.

Le noeud émet le message de niveau de priorité élevé dans un nombre de créneaux m de la seule trame T2 qui dépend d'une probabilité P1, souhaitée par le noeud émetteur, que le message soit reçu par au moins un de ses voisins. P1 et m satisfont la relation :

$$P1 = \left(1 - \frac{1}{n}\right)^{N-1-T} \left[\prod_{k=1}^{m-1}\left(1 - \frac{1}{n-k}\right)\right]^{T} \quad (6)$$

où :

- N est le nombre de noeuds voisins du noeud émettant tous dans une même trame,
- T est le nombre de noeuds voisins du noeud disposant d'un message de niveau de priorité élevé à émettre, et
- n est le nombre de créneaux par trame.

Dans un tableau sont calculées les valeurs de probabilité P1 que le message soit reçu par au moins un des voisins du noeud, en faisant varier les paramètres m, N, T, n. Ce tableau est une table de correspondance entre ces paramètres.

Le tableau est stocké dans une mémoire à laquelle le noeud accède, par exemple une mémoire du noeud, afin que le noeud détermine rapidement le nombre de créneaux m dans lequel il va émettre à partir de la probabilité P1.

Le noeud connait les valeurs de N, T, n et P1. Le noeud en déduit, à l'aide du tableau, la valeur de m qui permet d'atteindre une valeur la plus proche possible de P1.

Une fois le nombre de créneaux m obtenu, le noeud détermine les créneaux c1, c2, c3 dans lesquels il va émettre. Les créneaux c1, c2, c3 sont tirés aléatoirement et sans remise dans la seule trame T2 du sous ensemble de trames prédéfini propre au groupe.

Dans ce premier mode de réalisation, l'équation établissant la valeur de la probabilité P1 de réception du message de niveau de priorité élevé à partir des différents paramètres N, T, n et m, est obtenue à partir des considérations suivantes.

On note dans la suite :

- V(S) l'ensemble des noeuds voisins d'un noeud S considéré et émettant tous dans une même trame.
- V(Sstd) l'ensemble des noeuds appartenant à V(S) et disposant d'un message de niveau de priorité bas à émettre.
- V(Sal) l'ensemble des noeuds appartenant à V(S) et disposant d'un message de niveau de priorité élevé à émettre.
- N le nombre de noeuds appartenant à V(S). N est estimé à partir de la contrainte envoyée.
- T le nombre de noeuds appartenant à V(Sal). On a alors N-T noeuds appartenant à V(Sstd). T est déduit de N et du pourcentage de noeuds en portée susceptibles d'envoyer un message de niveau de priorité élevé en même temps.

- E un noeud appartenant à V(Sal).
- F un noeud appartenant à V(Sstd).
- n le nombre de créneaux par trame. n est un paramètre de configuration fixe et connu de tous les noeuds.
- m le nombre de créneaux utilisés dans une même trame pour transmettre un message de niveau de priorité élevé. Les noeuds de V(Sstd) disposent d'un créneau par trame par message.
- q le nombre de trames utilisées dans un cycle pour transmettre un message de niveau de priorité élevé. Les noeuds de V(Sstd) disposent d'une trame par cycle par message.
- m et q sont des variables que l'on cherche à fixer pour atteindre une probabilité de réception d'un message de niveau de priorité élevé donnée.
- p(RxC) la probabilité que le message envoyé par un noeud C, C$\in$ V(S) soit reçu par le noeud S.

Le noeud E dispose d'un message de niveau de priorité élevé à envoyer. Il transmet donc m fois le message de niveau de priorité élevé sur un ensemble de créneaux A = {x1,.., xm}. La probabilité que le message de niveau de priorité élevé émis par le noeud E soit reçue par le noeud S est égale à la probabilité que le message de niveau de priorité élevé soit reçu au moins une fois parmi les m émissions de E.

Soit Sr l'événement : « le message est reçu sur le créneau xr, avec xr appartenant à l'ensemble A ». Il y a alors :

$$p(Rx_E) = p\left(\bigcup_{l=1}^{m} S_l\right) \quad (7)$$

La probabilité de choisir un créneau étant uniforme et égale pour tous les noeuds, on a:

$$p(Rx_E) = \sum_{k=1}^{m}\left[(-1)^{k+1} C_m^k\, p\left(\bigcap_{l=1}^{k} S_l\right)\right] \quad (8)$$

D'autre part, la probabilité que le message de niveau de priorité élevé soit reçu sur k créneaux $p\left(\bigcap_{l=1}^{k} S_l\right)$ correspond à la probabilité qu'aucun des N-1 noeuds restants n'utilise un des k créneaux. En d'autres termes, aucun des N-T noeuds de V(Sstd) ne choisit un des k créneaux et aucun des T-1 autres noeuds de V(Sal) ne choisit un des k créneaux parmi les m créneaux qu'ils choisissent chacun.

Le tirage des m créneaux utilisés pour la transmission d'un message de niveau de priorité élevé se fait sans remise.

Le noeud E choisit donc le premier créneau parmi n, donc avec une probabilité de 1/n, puis choisit le second créneau parmi les n-1 créneaux restants donc avec une probabilité de 1/(n-1),...puis choisit finalement le m-ième créneau parmi les 1-1/(n-(m-1)) restants. Il y a ainsi :

$$p\left(\bigcap_{l=1}^{k} S_l\right) = \left(1-\frac{k}{n}\right)^{N-T} \prod_{j=0}^{m-1}\left(1-\frac{k}{n-j}\right)^{T-1} \quad (9)$$

d'où :

$$p(Rx_E) = \sum_{k=1}^{m}\left[(-1)^{k+1} C_m^k \left(1-\frac{k}{n}\right)^{N-T} \prod_{j=0}^{m-1}\left(1-\frac{k}{n-j}\right)^{T-1}\right] \quad (10)$$

A titre indicatif, la probabilité de réception d'un message de niveau de priorité bas par le noeud S lorsque T noeuds envoient des messages de niveau de priorité élevé varie alors comme présenté ci-dessous.

Le noeud F dispose d'un créneau de la trame pour envoyer un message de niveau de priorité bas. P(RxF) correspond donc à la probabilité qu'aucun des N-T-1 autres noeuds de V(Sstd) ne choisissent le même créneau que F et que les T noeuds de V(Sal) ne choisissent pas le même créneau que F parmi les m créneaux qu'ils choisissent chacun. Rappelons que le tirage des créneaux pour les messages de niveau de priorité élevé se fait sans remise. Il y a donc :

$$p(Rx_F) = \left(1-\frac{1}{n}\right)^{N-1-T}\left[\prod_{k=1}^{m-1}\left(1-\frac{1}{n-k}\right)\right]^T \quad (11)$$

Dans ce premier mode de réalisation, les messages de niveau de priorité élevé sont envoyés dans un nombre de créneaux plus important que les messages de niveau de priorité bas, dans la trame appartenant au sous ensemble de trames prédéfini propre au groupe du noeud.

De plus un noeud envoie un même message de niveau de priorité bas uniquement dans un créneau d'une seule trame du sous ensemble de trames prédéfini propre au groupe du noeud.

Ainsi le noeud émet tout message de niveau de priorité élevé un plus grand nombre de fois que tout message de niveau de priorité bas.

Cette solution présente l'avantage de n'impacter les probabilités de réception que des noeuds appartenant au même groupe que le noeud émetteur du message de niveau de priorité élevé.

Dans le deuxième mode de réalisation, à l'étape 540, le noeud émet le message de niveau de priorité élevé dans un unique créneau c1', c2', c3' d'au moins deux trames distinctes T2', T3', T5' parmi des trames successives T1', T2', T3', T4', T5' comme illustré sur la figure 22.

Dans ce cas, le noeud émet le message de niveau de priorité élevé une seule fois par trame T2', T3', T5' d'un même cycle dont l'une T2' fait partie du sous ensemble de trames prédéfini propre au groupe.

De préférence, seule une trame T2' fait partie du sous ensemble de trames prédéfini propre au groupe.

Dans l'exemple de la figure 22, le noeud émet le message de niveau de priorité élevé dans un créneau c1' d'une des trames T2' appartenant au sous ensemble de trames propre au groupe du noeud et émet le même message dans des créneaux c2', c3' de trames distinctes T3' et T5'.

Le noeud émet le message de niveau de priorité élevé dans un nombre de trames q qui dépend d'une probabilité P2 souhaitée par le noeud émetteur que le message soit reçu par au moins un de ses voisins. P2 et q satisfont la relation :

$$P2 = \sum_{k=1}^{q}\left[(-1)^{k+1} C_q^k \left(1-\frac{1}{n}\right)^{k(N-1)}\right] \quad (12)$$

avec les mêmes notations que dans le premier mode de réalisation.

Dans ce cas, un deuxième tableau est obtenu de façon analogue au premier mode de réalisation. Dans ce deuxième tableau sont calculées les valeurs de probabilité P2 que le message soit reçu par au moins un des voisins du noeud, en faisant varier les paramètres q, N, T, n.

Le noeud connait les valeurs de N, n et P2. Il en déduit la valeur de q qui permet d'atteindre une valeur la plus proche possible de P2, à l'aide de ce deuxième tableau

Une fois le nombre de trames calculé, le noeud détermine les trames dans lesquelles il va émettre.

La première trame choisie T2' est comprise dans le sous ensemble de trames prédéfini propre au groupe du noeud. Les autres trames T3', T5' sont tirées aléatoirement sans remise.

Dans ce deuxième mode de réalisation, l'équation établissant la valeur de la probabilité de réception du message de niveau de priorité élevé P2 à partir des différents paramètres N, n et q, est obtenue à partir des considérations suivantes, en gardant les notations du premier mode de réalisation.

Soit B = {y1,..., yq} l'ensemble des trames utilisées pour transmettre le message de niveau de priorité élevé, la probabilité de réception d'un message de niveau de priorité élevé par un noeud S considéré correspond à la probabilité que le message soit reçu dans au moins une des q trames.

Soit Yi l'événement « le message de niveau de priorité élevé est reçu dans la trame yi », alors :

$$p(Rx_E) = p\left(\bigcup_{i=1}^{q} Y_i\right) \quad (13)$$

Cette probabilité dépend principalement de la quantité d'émetteurs voisins dans les autres trames. Elle nécessite donc d'être calculée au cas par cas. Toutefois, Sous hypothèse que les probabilités de réception sont identiques dans chaque trame, on a :

$$p(Yi) = p(Y), \forall i \in B$$

et

$$p(Rx_E) = \sum_{k=1}^{q} \left[ (-1)^{k+1} C_q^k \, p\left( \bigcap_{i=1}^{k} Y_i \right) \right] \quad (14)$$

D'autre part, la réception des messages dans des trames différentes sont des événements indépendants. D'où :

$$p\left( \bigcap_{i=1}^{k} Y_i \right) = p(Y)^k$$

Ce qui conduit à

$$p(Rx_E) = \sum_{k=1}^{q} \left[ (-1)^{k+1} C_q^k \, p(Y)^k \right] \quad (15)$$

Dans cette solution, tous les noeuds de V(S) émettent dans un seul créneau par trame, ainsi,

$$p(Y_1) = \left( 1 - \frac{1}{n} \right)^{(N-1)}$$

Il reste donc finalement,

$$p(Rx_E) = \sum_{k=1}^{q} \left[ (-1)^{k+1} C_q^k \left( 1 - \frac{1}{n} \right)^{k(N-1)} \right] \quad (16)$$

Le message de niveau de priorité élevé est envoyé dans un nombre de trames plus important que tout message de niveau de priorité bas. Dans chaque trame il est envoyé au plus une fois le message de niveau de priorité élevé et au plus une fois le message de niveau de priorité bas.

Ainsi, dans ce deuxième mode de réalisation le noeud envoie un plus grand nombre de messages de niveau de priorité élevé qu'un nombre de messages de niveau de priorité bas.

Dans le troisième mode de réalisation, à l'étape 540 le noeud émet le message de niveau de priorité élevé dans au moins deux créneaux d'au moins deux trames distinctes.

Dans ce cas, le noeud émet le message de niveau de priorité élevé plusieurs fois par trame et dans plusieurs trames d'un cycle.

Le noeud émet le message de niveau de priorité élevé dans un nombre de créneaux m et dans un nombre de trames q qui dépendent de la probabilité P3 que le message soit reçu par au moins un de ses voisins. P3, m et q satisfont la relation :

$$P3=\sum_{k=1}^{q}\left[(-1)^{k+1}C_q^k\,p(Y)^k\right] \quad (17)$$

avec

$$p(Y)=\sum_{k=1}^{m}\left[(-1)^{k+1}C_m^k\left(1-\frac{k}{n}\right)^{N-T}\prod_{j=0}^{m-1}\left(1-\frac{k}{n-j}\right)^{T-1}\right] \quad (18)$$

avec les mêmes notations que dans le premier et dans le deuxième mode de réalisation.

Dans ce cas, un troisième tableau est obtenu de façon analogue au premier et au deuxième mode de réalisation. Dans ce troisième tableau sont calculées les valeurs de probabilité P3 que le message soit reçu par au moins un des voisins du noeud, en faisant varier les paramètres m, q, N, T, n.

Le noeud connait les valeurs de N, T, n et P3. Il en déduit la valeur de m et q qui permettent d'atteindre une valeur la plus proche possible de P3, à partir de ce troisième tableau.

Une fois le nombre de créneaux m et le nombre de trames q calculés, le noeud détermine les créneaux et les trames dans lesquelles il va à émettre.

Une trame est comprise dans le sous ensemble de trames prédéfini. Les autres trames sont tirées aléatoirement et sans remise. Les créneaux sont aussi tirés aléatoirement et sans remise au sein des trames.

De préférence, seule une trame est comprise dans le sous ensemble de trames prédéfini.

Dans ce deuxième mode de réalisation, l'équation établissant la valeur de la probabilité de réception du message de niveau de priorité élevé P3 à partir des différents paramètres N, T, n et m et q est obtenue à partir des considérations suivantes, en gardant les notations du premier et du deuxième mode de réalisation.

Soit B = {y1...yq} l'ensemble des trames utilisées pour transmettre le message de niveau de priorité élevé, la probabilité de réception d'un message de niveau de priorité élevé par un noeud S considéré correspond à la probabilité que le message soit reçu dans au moins une des q trames.

Soit Yi l'événement « le message de niveau de priorité élevé est reçu dans la trame yi », alors :

$$p(Rx_E)=p\left(\bigcup_{i=1}^{q}Y_i\right) \quad (19)$$

Chaque P(Yi) est alors calculé au cas par cas avec l'Equation (10).

Dans le pire cas, tous les noeuds émettant un message de niveau de priorité élevé choisissent les mêmes trames. Les probabilités de réception sont identiques dans chaque trame, on a :

$$p(Yi)=p(Y),\forall i\in B$$

et

$$p(Rx_E)=\sum_{k=1}^{q}\left[(-1)^{k+1}C_q^k\,p\left(\bigcap_{i=1}^{k}Y_i\right)\right] \quad (20)$$

D'autre part, la réception des messages dans des trames différentes sont des événements indépendants. D'où :

$$p\left(\bigcap_{i=1}^{k}Y_i\right)=p(Y)^k$$

Ce qui conduit à :

$$p(Rx_E) = \sum_{k=1}^{q} \left[ (-1)^{k+1} C_q^k \, p(Y)^k \right] \quad (21)$$

Avec P(Y) calculé avec l'équation (10).

Ce troisième mode de réalisation combine les avantages du premier et du deuxième mode de réalisation.

## Revendications

1. Procédé de transmission de messages dans un réseau ad hoc comprenant au moins deux noeuds émetteurs-récepteurs propres à recevoir et émettre des messages et communiquant entre eux par l'envoi de messages dans des créneaux temporels en accès aléatoire organisés en trames, les noeuds du réseau étant répartis en groupes selon une règle de répartition de base, les noeuds de chaque groupe ayant le droit d'émettre des messages dans un créneau temporel par trame d'un sous ensemble de trames prédéfini propre au groupe suivant la règle de répartition de base,
**caractérisé en ce que** :

   - les messages comprennent au moins des messages de niveau de priorité bas et des messages de niveau de priorité élevé,
   - chacun des noeuds n'émet les messages de niveau de priorité bas que dans un créneau temporel par trame du sous ensemble de trames prédéfini propre à son groupe, et
   - chacun des noeuds émet les messages de niveau de priorité élevé dans un créneau temporel (c1 ; c1') par trame du sous ensemble de trames prédéfini propre à son groupe (T2 ; T2') et dans au moins un autre créneau temporel (c2, c3 ; c2', c3'), le noeud émettant tout message de niveau de priorité élevé un plus grand nombre de fois que tout message de niveau de priorité bas.

2. Procédé selon la revendication 1, **caractérisé en ce que** chacun des noeuds émet les messages de niveau de priorité élevé dans au moins deux créneaux temporels (c1, c2, c3) d'une seule trame (T2) du sous ensemble de trames prédéfini propre à son groupe.

3. Procédé selon la revendication 2, **caractérisé en ce que** le noeud émettant un message de niveau de priorité élevé émet, en fonction de la probabilité P1 que le message soit reçu par au moins un de ses voisins, le message de niveau de priorité élevé dans un nombre de créneaux temporels m satisfaisant la relation :

$$P1 = \sum_{k=1}^{m} \left[ (-1)^{k+1} C_m^k \left(1 - \frac{k}{n}\right)^{N-T} \prod_{j=0}^{m-1} \left(1 - \frac{k}{n-j}\right)^{T-1} \right]$$

   où :

   - N est le nombre de noeuds voisins du noeud émettant tous dans une même trame,
   - T est le nombre de noeuds voisins du noeud disposant d'un message de niveau de priorité élevé à émettre, et
   - n est le nombre de créneaux temporels par trame.

4. Procédé selon la revendication 1, **caractérisé en ce que** chacun des noeuds émet les messages de niveau de priorité élevé dans un unique créneau temporel (c1', c2', c3') d'au moins deux trames distinctes (T2', T3', T5').

5. Procédé selon la revendication 4, **caractérisé en ce que** le noeud émettant un message de niveau de priorité élevé émet, en fonction de la probabilité P2 que le message soit reçu par au moins un de ses voisins, le message de niveau de priorité élevé dans un nombre de trames q satisfaisant la relation :

$$P2=\sum_{k=1}^{q}\left[(-1)^{k+1}C_q^k\left(1-\frac{1}{n}\right)^{k(N-1)}\right]$$

où :

- N est le nombre de noeuds voisins du noeud émettant tous dans une même trame,
- T est le nombre de noeuds voisins du noeud disposant d'un message de niveau de priorité élevé à émettre, et
- n est le nombre de créneaux temporels par trame.

**6.** Procédé selon la revendication 1, **caractérisé en ce que** chacun des noeuds émet les messages de niveau de priorité élevé dans au moins deux créneaux temporels d'au moins deux trames distinctes.

**7.** Procédé selon la revendication 6, **caractérisé en ce que** le noeud émettant un message de niveau de priorité élevé émet, en fonction de la probabilité P3 que le message soit reçu par au moins un de ses voisins, le message de niveau de priorité élevé dans un nombre de créneaux temporels m et un nombre de trames q satisfaisant la relation :

$$P3=\sum_{k=1}^{q}\left[(-1)^{k+1}C_q^k\,p(Y)^k\right]$$

avec

$$p(Y)=\sum_{k=1}^{m}\left[(-1)^{k+1}C_m^k\left(1-\frac{k}{n}\right)^{N-T}\prod_{j=0}^{m-1}\left(1-\frac{k}{n-j}\right)^{T-1}\right]$$

où :

- N est le nombre de noeuds voisins du noeud émettant tous dans une même trame,
- T est le nombre de noeuds voisins du noeud disposant d'un message de niveau de priorité élevé à émettre, et
- n est le nombre de créneaux temporels par trame.

**8.** Procédé selon l'une quelconque des revendications 4 à 7, **caractérisé en ce que** seule une trame est comprise dans le sous ensemble de trames prédéfini.

**9.** Procédé selon l'une quelconque des revendications 1 à 8, **caractérisé en ce que** :

- chaque noeuds définit (24) une contrainte (*neighborConstraint*) pour les noeuds voisins,
- chaque noeud transmet (24) la contrainte définie (*neighborConstraint*) aux noeuds voisins, et
- chaque noeud (26) définit le groupe auquel il appartient selon la règle de répartition en fonction des contraintes (*neighborconstraint*) reçues des noeuds voisins.

**10.** Procédé selon la revendication 9, **caractérisé en ce que** dans lequel la règle de répartition d'un noeud dans un groupe tient compte du nombre de noeuds émetteurs voisins ou interférents que les noeuds voisins du noeud considéré ont.

**11.** Réseau ad hoc comportant un ensemble de noeuds émetteurs-récepteurs propres à recevoir et émettre des messages et communiquant entre eux par l'envoi de messages dans des créneaux temporels en accès aléatoire organisés en trames, **caractérisé en ce que** chaque noeud comporte des moyens pour la mise en oeuvre du procédé selon l'une quelconque des revendications précédentes.

**Patentansprüche**

**1.** Verfahren zur Übermittlung von Nachrichten in einem ad hoc Netzwerk umfassend mindestens zwei Sender-Empfänger-Knoten, geeignet zum Empfangen und Senden von Nachrichten und untereinander mittels Versand von Nachrichten in Zeitschlitze mit zufälligem Zugriff, organisiert in Rahmen, kommunizierend, wobei die Knoten des Netzwerks gemäß einer grundlegenden Verteilungsregel in Gruppen aufgeteilt sind, wobei die Knoten jeder Gruppe berechtigt sind, Nachrichten in einem Zeitschlitz per Rahmen einer Untergruppe von Rahmen, die eigens für die Gruppe folgend der grundlegenden Unterteilungsregel vordefiniert ist, zu senden,
**dadurch gekennzeichnet, dass**

- die Nachrichten mindestens Nachrichten einer Stufe niedriger Priorität und Nachrichten einer Stufe erhöhter Priorität umfassen,
- jeder der Knoten die Nachrichten einer Stufe niedriger Priorität nur in einem Zeitschlitz per Rahmen der Untergruppe von Rahmen, eigens definiert für seine Gruppe, sendet, und
- jeder der Knoten Nachrichten einer Stufe erhöhter Priorität in einem Zeitschlitz (c1; c1') per Rahmen einer Untergruppe von Rahmen, eigens vordefiniert durch seine Gruppe (T2; T2') und in mindestens einem anderen Zeitschlitz (c2, c3; c2', c3') sendet, wobei der Knoten jegliche Nachricht einer Stufe erhöhter Priorität öfter sendet als jegliche Nachricht einer Stufe niedriger Qualität.

**2.** Das Verfahren gemäß Anspruch 1, **dadurch gekennzeichnet, dass** jeder der Knoten die Nachrichten einer Stufe erhöhter Priorität in mindestens zwei Zeitschlitze (c1; c2, c3) in einem einzigen Rahmen (T2) der Untergruppe von Rahmen, eigens vordefiniert für seine Gruppe, sendet.

**3.** Das Verfahren gemäß Anspruch 2, **dadurch gekennzeichnet, dass** der Knoten eine Nachricht einer Stufe erhöhter Priorität als Funktion der Wahrscheinlichkeit P1, dass die Nachricht durch mindestens einen seiner Nachbarn erhalten wird, die Nachricht einer Stufe erhöhter Priorität in einer Anzahl an Zeitschlitzen m sendet, die die Gleichung:

$$P1=\sum_{k=1}^{m}\left[(-1)^{k+1}C_m^k\left(1-\frac{k}{n}\right)^{N-T}\prod_{j=0}^{m-1}\left(1-\frac{k}{n-j}\right)^{T-1}\right]$$

erfüllt, wobei:

- N die Anzahl an Nachbarknoten des sendenden Knotens ist, die alle in demselben Rahmen senden,
- T die Anzahl an Nachbarknoten des Knotens mit einer zu versendenden Nachricht von erhöhter Priorität ist, und
- n die Anzahl der Zeitschlitze per Rahmen ist.

**4.** Das Verfahren gemäß Anspruch 1, **dadurch gekennzeichnet, dass** jeder der Knoten die Nachrichten einer Stufe erhöhter Priorität in einem einzigen Zeitschlitz (c1', c2', c3') von mindestens zwei verschiedenen Rahmen (T2', T3', T5') sendet.

**5.** Das Verfahren gemäß Anspruch 4, **dadurch gekennzeichnet, dass** der Knoten, der eine Nachricht einer Stufe erhöhter Priorität als Funktion der Wahrscheinlichkeit P2, dass die Nachricht durch mindestens einen seiner Nachbarn erhalten wird, die Nachricht einer Stufe erhöhter Priorität in einer Anzahl von Rahmen q sendet, die die Gleichung:

$$P2=\sum_{k=1}^{q}\left[(-1)^{k+1}C_q^k\left(1-\frac{1}{n}\right)^{k(N-1)}\right]$$

erfüllt, wobei:

- N die Anzahl an Nachbarknoten des sendenden Knotens ist, die alle in demselben Rahmen senden,
- T die Anzahl an Nachbarknoten des Knotens mit einer zu versendenden Nachricht einer Stufe erhöhter Priorität ist, und
- n die Anzahl von Zeitschlitzen per Rahmen ist.

**6.** Verfahren gemäß Anspruch 1, **dadurch gekennzeichnet, dass** jeder der Knoten die Nachrichten einer Stufe erhöhter Priorität in mindestens zwei Zeitschlitzen von mindestens zwei verschiedenen Rahmen sendet.

7. Verfahren gemäß Anspruch 6, **dadurch gekennzeichnet, dass** der sendende Knoten eine Nachricht einer Stufe erhöhter Priorität als Funktion der Wahrscheinlichkeit P3, dass die Nachricht durch mindestens einen seiner Nachbarn erhalten wird, die Nachricht einer Stufe erhöhter Priorität in einer Anzahl von Zeitsschlitzen m und einer Anzahl von Rahmen q sendet, die die Gleichung:

$$P3 = \sum_{k=1}^{q} \left[ (-1)^{k+1} C_q^k \, p(Y)^k \right]$$

mit

$$p(Y) = \sum_{k=1}^{m} \left[ (-1)^{k+1} C_m^k \left(1 - \frac{k}{n}\right)^{N-T} \prod_{j=0}^{m-1} \left(1 - \frac{k}{n-j}\right)^{T-1} \right]$$

erfüllen, wobei:

- N die Anzahl an Nachbarknoten des sendenden Knotens ist, die alle in demselben Rahmen senden,
- T die Anzahl an Nachbarknoten des Knotens mit einer zu versendenden Nachricht von erhöhter Priorität ist, und
- n die Anzahl von Zeitsschlitzen per Rahmen ist.

8. Das Verfahren gemäß einem der Ansprüche 4 bis 7, **dadurch gekennzeichnet, dass** alleine ein Rahmen in der Untergruppe von vordefinierten Rahmen umfasst ist.

9. Das Verfahren gemäß einem der Ansprüche 1 bis 8, **dadurch gekennzeichnet, dass**:

- jeder Knoten eine Bedingung (*neighbourConstraint*) für die Nachbarknoten definiert (24),
- jeder Knoten die definierte Bedingung (*neighbourConstraint*) an die Nachbarknoten übermittelt,
- jeder Knoten die Gruppe definiert (26), der er gemäß der Verteilungsregel als Funktion der von den Nachbarknoten erhaltenen Bedingungen (*neighbourConstraint*) angehört.

10. Das Verfahren gemäß Anspruch 9, **dadurch gekennzeichnet, dass** die Verteilungsregel eines Knotens in einer Gruppe Rücksicht nimmt auf die Anzahl von benachbarten oder interferierenden Sendeknoten, die die Nachbarknoten des betrachteten Knotens haben.

11. Ad hoc Netzwerk, umfassend eine Gruppe von Sender-Empfänger-Knoten, die geeignet sind, Nachrichten zu empfangen und zu senden und die untereinander durch Versenden von Nachrichten in Zeitschlitzen mit zufälligem Zugriff, organisiert in Rahmen, kommunizieren, **dadurch gekennzeichnet, dass** jeder Knoten Mittel zur Umsetzung eines Verfahrens gemäß einem der voranstehenden Ansprüche beinhaltet.

## Claims

1. A message transmission method for transmitting messages in an ad hoc network comprising at least two transmitter-receiver nodes that are capable of receiving and transmitting messages and communicating with each other through the despatch of messages within random access time slots organised in frames, the nodes of the network being distributed into groups in accordance with a basic distribution rule, with the nodes in each group having the right to send messages in one time slot per frame of a predefined subset of frames specific to the group in accordance with the basic distribution rule,
**characterised in that**:

- the messages include at least messages having a low priority level and messages having a high priority level;
- each of the nodes transmits the low priority level messages only in one time slot per frame of the predefined subset of frames specific to its own group; and

- each of the nodes transmits the high priority level messages in one time slot (c1 ; c1') per frame of the predefined subset of frames specific to its own group (T2; T2') and in at least one other time slot (c2, c3; c2', c3'), the node transmitting any message having a high priority level a greater number of times than any message having a low priority level.

**2.** A method according to claim 1, **characterised in that** each of the nodes transmits the high priority level messages in at least two time slots (c1, c2 c3) of a single frame (T2) of the predefined subset of frames specific to its own group.

**3.** A method according to claim 2, **characterised in that** the node transmitting a high priority level message transmits, based on the probability P1 of the message being received by at least one of its neighbouring nodes, the high priority level message in a number of time slots m satisfying the relationship:

$$P1 = \sum_{k=1}^{m} \left[ (-1)^{k+1} C_m^k \left(1 - \frac{k}{n}\right)^{N-T} \prod_{j=0}^{m-1} \left(1 - \frac{k}{n-j}\right)^{T-1} \right]$$

where:

- N is the number of neighbouring nodes of the node all transmitting in a same given frame,
- T is the number of neighbouring nodes of the node having available a high priority level message to be transmitted, and
- n is the number of time slots per frame.

**4.** A method according to claim 1, **characterised in that** each of the nodes transmits the high priority level messages in a single time slot (c1', c2', c3') of at least two distinctly separate frames (T2', T3', T5').

**5.** A method according to claim 4, **characterised in that** the node transmitting a high priority level message transmits, based on the probability P2 of the message being received by at least one of its neighbouring nodes, the high priority level message in a number of frames q satisfying the relationship:

$$P2 = \sum_{k=1}^{q} \left[ (-1)^{k+1} C_q^k \left(1 - \frac{1}{n}\right)^{k(N-1)} \right]$$

where:

- N is the number of neighbouring nodes of the node all transmitting in a same given frame,
- T is the number of neighbouring nodes of the node having available a high priority level message to be transmitted, and
- n is the number of time slots per frame.

**6.** A method according to claim 1, **characterised in that** each of the nodes transmits the high priority level messages in at least two time slots of at least two distinctly separate frames.

**7.** A method according to claim 6, **characterised in** the node transmitting a high priority level message transmits, based on the probability P3 of the message being received by at least one of its neighbouring nodes, the high priority level message in a number of time slots m and a number of frames q satisfying the relationship:

$$P3 = \sum_{k=1}^{q} \left[ (-1)^{k+1} C_q^k \, p(Y)^k \right]$$

with

$$p(Y)=\sum_{k=1}^{m}\left[(-1)^{k+1}C_m^k\left(1-\frac{k}{n}\right)^{N-T}\prod_{j=0}^{m-1}\left(1-\frac{k}{n-j}\right)^{T-1}\right]$$

where

- N is the number of neighbouring nodes of the node all transmitting in a same given frame,
- T is the number of neighbouring nodes of the node having available a high priority level message to be transmitted, and
- n is the number of time slots per frame.

**8.** A method according to any one of claims 4 to 7, **characterised in that** only one frame is included in the predefined subset of frames.

**9.** A method according to claim 1, **characterised in that**:

- each node defines (24) a constraint *(neighbourConstraint)* for the neighbouring nodes,
- each node transmits (24) the defined constraint *(neighbourconstraint)* to the neighbouring nodes, and
- each node (26) defines the group to which it belongs in accordance with the distribution rule based on the constraints *(neighbourConstraint)* received from the neighbouring nodes.

**10.** A method according to claim 9, **characterised in that** the distribution rule of a node in a group takes into account the number of neighbouring transmitter nodes or interfering nodes that the neighbouring nodes of the node considered have.

**11.** An ad hoc network comprising a set of transmitter - receiver nodes that are capable of receiving and transmitting messages and communicating with each other through the despatch of messages in random access time slots organised in frames, **characterised in that** each node includes the means for implementation of the method according to any one of the preceding claims.

Collisions
4
8
10
1
3
5
2
6
9
11
7

FIG.1

FIG.2 (début)
27
Nouvelle trame
frameNumber+1
nbdleSlot = 0
nbReadableSlot = 0
nbCollidedSlot = 0
ownConstraintTemp = 1
changeConstraint = faux
28
neighborConstraint = 1
nodeToWait = <indéfini>
frameNumber = 0
10
Nouveau créneau temporel
29
20
Mise à jour des variables
30
OUI
Est libre ?
NON
36
nbIdleSlot+1
32
OUI
Est lisible ?
NON
38
40
nbReadableSlot+1
nbCollidedSlot+1
Enregistrement des contraintes envoyées par les noeuds voisins
ownConstraintTemp = max(ownConstraintTemp, msgConstraint)
42
22
Mise à jour de NodeToWaitTemp
44
46
NON
nodeToWait a-t-il réemis une contrainte, plus faible ?
OUI
48
changeconstraint = vrai
34
24
NON
Fin de la trame ?
Mise à jour de NeighborConstraint
OUI
Calcul de nbNeighborPerframe
50

FIG.2 (fin)
52
Est-ce le moment d'estimer le nbre de voisins total ?
NON
OUI
53
Droit d'émettre à la prochaine trame ?
OUI
NON
54
Choix du créneau temporel pour émettre neighborConstraint
56
nbNeighborMeasurement = sum(nbNeighborPerFrame)
58
Lissage de l'estimation calcul de neighborConstraint
60
Droit d'émettre à la prochaine trame ?
NON
OUI
Détermination de la trame où se fera le prochain calcul de neighborConstraint
68
64
La trame où se fera le prochain calcul de neighborConstraint devient frameNumber+1
66
Choix du créneau temporel pour émettre neighborConstraint
26
Mise à jour de ownConstraint
69
ownConstraintTemp >ownConstraint ?
OUI
NON
72
changeConstraint vrai ?
OUI
NON
74
timeTolive = 0 ?
OUI
NON
70
ownConstraint = ownConstraintTemp
nodeToWait = nodeToWaitTemp
réinitialisation de timeTolive
76
timeToLive-1

92
94
96
98
90
Slot 1
Slot 2
Slot 3
Slot 4
Nœud 1
Nœud 2
Nœud 3
Nœud 4
Nœud 5
Nœud 6
Nœud 7
Emission
Collision
Collision
1
2
3
4
5
6
7
8

FIG.3

101
102
103
104
105
100
Slot 1
Slot 2
Slot 3
Slot 4
Slot 5
Nœud 1
Nœud 2
Nœud 3
Nœud 4
Nœud 5
Nœud 6
Nœud 7
Emission
106
107
108
109
7 Nœuds / 5 Slots
7/5=1.4
k=2

FIG.4

121
122
123
124
Slot 1
Slot 2
Slot 3
Slot 4
Nœud 1
Nœud 2
Nœud 3
Nœud 4
Nœud 5
Nœud 6
Nœud 7
Emission
120
125
126
127
128
129
7 Nœuds / 4 Slots
7/4 = 1.75
k=2.5

FIG.5

141
142
143
144
145
140
Slot 1
Slot 2
Slot 3
Slot 4
Slot 5
Nœud 1
Nœud 2
Nœud 3
Nœud 4
Nœud 5
Nœud 6
Nœud 7
Nœud 8
Nœud 9
Nœud10
Emission
146
147
148
149
150
10 Nœuds / 5 Slots
10/5 = 2
k=2.6

FIG.6

160
161
162
163
164
Slot 1
Slot 2
Slot 3
Slot 4
Nœud 1
Nœud 2
Nœud 3
Nœud 4
Nœud 5
Nœud 6
Nœud 7
Emission
Emission
Emission
Emission
Emission
Emission
Emission
Collision
Collision
1
2
3
4
5
6
7
8

FIG.7

Trame 1
1
2
3
4
5
6
7
8
170
Slot 1
Slot 2
Slot 3
Slot 4
Noeud 1
Noeud 2
Noeud 3
Noeud 4
Noeud 5
Noeud 6
Noeud 7
Emission
Emission
Emission
Collision

FIG.8

Trame 2
1
2
3
4
5
6
7
8
180
Slot 1
Slot 2
Slot 3
Slot 4
Nœud 1
Nœud 2
Nœud 3
Nœud 4
Nœud 5
Nœud 6
Nœud 7
Emission
Emission

FIG.9

Trame 3
1
2
3
4
5
6
7
8
190
Slot 1
Slot 2
Slot 3
Slot 4
Noeud 1
Noeud 2
Noeud 3
Noeud 4
Noeud 5
Noeud 6
Noeud 7
Emission
Emission

FIG.10

191
Slot 1
Slot 2
Slot 3
Slot 4
Nœud 2
Q=2
Nœud 3
Q=4
1
2
3
4
5
6
7
8

FIG.11

Q=1
Q=1
Q=4
Q=1
Q=1
Q=3
Q=2
Q=1
Q=2
Q=1
192

| | Trame 15 | Trame 16 | Trame 17 | Trame 18 | Trame 19 | Trame 20 | Trame 21 |
|---|---|---|---|---|---|---|---|
| N2 | | Q=2 | | Q=2 | | Q=2 | |
| N3 | Q=4 | | | Q=4 | | | Q=4 |

FIG.12

Utilisation de la contrainte Q
Emission de la contrainte Q
Trame t-1
Trame t
Trame t+1
Trame t+2
Calcul de la contrainte Q
Réception de la contrainte Q

FIG.13

Réception de la contrainte 3
Utilisation de la contrainte 3
Utilisation de la contrainte 3
Utilisation de la contrainte 3
Trame t-1
Trame t
Trame t+1
Trame t+2
Trame t+3
Trame t+4
Trame t+5
Calcul de la contrainte 3
Emission de la contrainte 3
Estimation voisinage
Estimation voisinage
Estimation Voisinage + Calcul de la contrainte Q

FIG.14

Réception de la contrainte 3
Utilisation de la contrainte 3
Utilisation de la contrainte 3
Utilisation de la contrainte 3
Trame 10
Trame 11
Trame 12
Trame 13
Trame 14
Trame 15
Calcul de la contrainte 3
Report d'émission
Emission de la contrainte 3
Estimation voisinage
Estimation voisinage
Estimation Voisinage + Calcul de la contrainte Q

FIG.15

200

| | Trame 14 | Trame 15 | Trame 16 | Trame 17 | Trame 18 | Trame 19 | Trame 20 | Trame 21 | Trame 22 |
|---|---|---|---|---|---|---|---|---|---|
| N1 Q=2 q=4 | E | E V(1) | E V(1) | Tx | E | E V(1) | E V(1) | Tx | E |
| N3 Q=4 q=3 | V(3) | Tx | E | E | E | E V(3) | E V(3) | Tx | E |
| N7 Q=3 q=4 | E V(7) | Tx | E | E | E V(7) | Tx | E | E | E V(7) |

E Estimation

E V(x) Estimation + Calcul du voisinage du nœud x

Tx Transmission d'une nouvelle contrainte (après mise à jour)

FIG.16

Voisins soumis à Q=3
Voisins soumis à Q=2
230
Trame 16
Trame 17
Trame 18
Trame 19
Trame 20
Trame 21
Nx
Q=3
q=4
V(x) = 6
E
E
E
V(x)
Tx
V'(x)
E
E
1 Voisin (erreur)
2 Voisins
2 Voisins
Envoie Q=2 + 3 Voisins
3 Voisins
4 Voisins
V(x) = 6*0.80 +5*0.20
= 5.8 Voisins
=> Q = 2
V'(x) = 5.8*0.80+7*0.20
=6.04 Voisins
=> Q = 3
V(x) = 6.04*0.80 +7*0.20
= 6.23 Voisins
=> Q = 3

FIG.17

Q=1
2
Q=3
1
Q=2
3
Q=1
9
Q=1
6
4
Q=1
Q=3
5
7
Q=1
Q=1
8
194
Nœud 1: q=2
Trame 12
Slot 1
Slot 2
Slot 3
Slot 4
193
Nœud 2
Tx Q=1
q=1
Nœud 3
Tx Q=2
q=1
Nœud 4
Tx Q=1
q=1
Nœud 5
Tx Q=3
q=1
Nœud 5: Détection d'erreur:
Q(3) > q(2) → « Nœud 1 n'a
pas reçu ma contrainte »
Trame 13
Slot 1
Slot 2
Slot 3
Slot 4
Nœud 1
Tx Q=3
q=2
Nœud 6
Nœud 7
Tx Q=1
q=3
Nœud 8

FIG.18

| | Trame 13 | Trame 14 | Trame 15 |
|---|---|---|---|
| N1 | Soumis à q=2 Tx | Soumis à q=2 | Soumis à q=2 Tx |
| N6 | Soumis à q=3 | Soumis à q=3 | Soumis à q=3 Tx |
| N7 | Soumis à q=3 Tx | Soumis à q=3 | Soumis à q=3 |
| N8 | Soumis à q=3 | Soumis à q=3 Tx | Soumis à q=3 |

2ème Emission au cours de la période d'estimation. A ne pas prendre en compte

195

FIG.19

-500-
-510-
-520-
-530-
-540-

FIG.20

T1
T2
T3
T4
C1
C2
C3

FIG.21

T1'
T2'
T3'
T4'
T5'
C1'
C2'
C3'

FIG.22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2466981 A
- EP 2440001 A